# EUROPEAN PATENT SPECIFICATION

(11) **EP 2 913 383 B1**
(45) Date of publication and mention of the grant of the patent: **21.08.2019**
(21) Application number: 13848235.1
(22) Date of filing: 25.10.2013
(51) Int. Cl.: C10G 51/04, C07B 61/00, C07C 4/06, C07C 7/04, C07C 11/04, C07C 11/06, C07C 11/08, C07C 15/04, C07C 15/06, C07C 15/08, C10G 9/00, C10G 11/05, C10G 45/50, C10G 69/06, C10G 35/095, C10G 63/04, C10G 69/08

(54) **OLEFIN AND SINGLE-RING AROMATIC HYDROCARBON PRODUCTION METHOD**
HERSTELLUNGSVERFAHREN FÜR OLEFIN UND AROMATISCHEN EINZELRING-KOHLENWASSERSTOFF
PROCÉDÉ DE PRODUCTION D'OLÉFINES ET D'HYDROCARBURES AROMATIQUES À CYCLE UNIQUE

(30) Priority: 25.10.2012 JP 2012236132
(43) Date of publication of application: 02.09.2015
(73) Proprietor: JX Nippon Oil & Energy Corporation, Chiyoda-ku Tokyo 100-8162 (JP)
(72) Inventor: YANAGAWA Shinichiro, Tokyo 100-8162 (JP); KOBAYASHI Masahide, Tokyo 100-8162 (JP); YOSHIWARA Yukihiro, Tokyo 100-8162 (JP)
(74) Representative: Gilani, Anwar
(86) International application number: PCT/JP2013/079042
(87) International publication number: WO 2014/065420

(56) References cited:
- WO-A1-00/12450
- WO-A1-2006/137615
- WO-A1-2012/036182
- WO-A1-2012/036186
- JP-A- S6 343 995

## Description

### Technical Field

The present invention relates to a method for producing an olefin and a monocyclic aromatic hydrocarbon and, particularly, to a method for producing an olefin having 2 to 4 carbon atoms and a monocyclic aromatic hydrocarbon having 6 to 8 carbon atoms.

Priority is claimed on Japanese Patent Application No. 2012-236132, filed October 25, 2012.

### Background Art

Oil containing a polycyclic aromatic component such as light cycle oil (hereinafter, abbreviated as "LCO") which is a cracked light oil produced in a fluid catalytic cracking (hereinafter, abbreviated as "FCC") apparatus has so far been used mainly as a light oil or heavy oil-oriented fuel base material. In recent years, a technique has been proposed that efficiently produces a monocyclic aromatic hydrocarbon having 6 to 8 carbon atoms which can be used as a high octane gasoline base material or a petrochemical feedstock and has a high added value (for example, benzene, toluene, or coarse xylene; hereinafter, these will be collectively referred to as "BTX") from a feedstock containing a polycyclic aromatic component.

In addition, as an application of the method for producing BTX from a feedstock containing a polycyclic aromatic component, there has been another method has been proposed for producing an aromatic hydrocarbon in which BTX is produced from a thermally-cracked heavy oil obtained from an apparatus for producing ethylene (for example, refer to PTL 1).

In the method for producing an aromatic hydrocarbon according to PTL 1, compared with the thermally-cracked heavy oil (cracked heavy oil) in the related art which has been mostly used as a fuel or the like for a boiler or the like in industrial complexes, the thermally-cracked heavy oil is hydrogenated, is brought into contact with a catalyst for producing a monocyclic aromatic hydrocarbon, and is reacted, thereby producing BTX.
WO 2006/137615 discloses a process for increasing the production of light olefin hydrocarbons from a hydrocarbon feedstock.
WO 00/12450 discloses a zeolite catalyst composition for conversion of a hydrocarbon-containing fluid.
WO 2012/036182 discloses a method for manufacturing an aromatic hydrocarbon including a decomposition reforming reaction step, a separation step, a refinement recovery step and a naphthalene recorvery step.
WO 2012/036186 discloses an aromatic hydrocarbon production process from a raw material oil containing a hydrogenated oil product of a thermally cracked heavy oil.

### Citation List

### Patent Literature

[PTL 1] Japanese Unexamined Patent Application, First Publication No. 2012-062356

### Non-Patent Literature

[NPL 1] "Petrochemical Process" edited by The Japan Petroleum Institute and published by Kodansha Ltd., August 10, 2001, pp. 21 to 30.

### Summary of Invention

### Technical Problem

Light olefins such as ethylene or propylene produced using an apparatus for producing ethylene are, similar to BTX, highly valuable in an industrial sense and there is a demand for an increase in the production efficiency of light olefins with the apparatus for producing ethylene.

However, in the method for producing an aromatic hydrocarbon of PTL 1, basically, a BTX fraction alone is produced from the thermally-cracked heavy oil and there is no disclosure of the possibility that light olefins can be produced. Therefore, when the technique of PTL 1 is employed, while it is possible to efficiently produce BTX from the thermally-cracked heavy oil obtained from the apparatus for producing ethylene, no light olefins are produced and thus, regarding the production of light olefins which is the original purpose of the apparatus for producing ethylene, consequently, the demand for an increase in production efficiency cannot be met.

In addition, as for the apparatus for producing ethylene, while there is a demand for an increase in the production efficiency of light olefin, it is needless to say that the production efficiency needs to be increased while an increase in the cost is suppressed.

The present invention has been made in consideration of the above-described circumstances and an object thereof is to provide a method for producing an olefin and a monocyclic aromatic hydrocarbon which enables the production of light olefins from an apparatus for producing ethylene with higher production efficiency while suppressing an increase in the cost and, furthermore, enables the efficient production of BTX as well.

### Solution to Problem

According to a first aspect of the invention there is provided a method as defined in claim 1. Optional features are described in the dependent claims.

The production method includes, before the cracking and reforming reaction step, a hydrogenation reaction step of partially hydrogenating part or all of the feedstock oil.

In addition, in the production method, in the hydrogenation reaction step, as hydrogenation conditions for hydrogenating the feedstock oil, a hydrogen partial pressure be set in a range of 1 MPa to 9 MPa, a hydrogenation temperature be set in a range of 150°C to 400°C, and, as a hydrogenation catalyst, a catalyst obtained by supporting at least one metal selected from Group 6 metals in the periodic table in a range of 10% by mass to 30% by mass and at least one metal selected from Groups 8 to 10 metals in the periodic table in a range of 1% by mass to 7% by mass on an inorganic carrier containing aluminum oxide, based on the total mass of the catalyst is used.

In addition, in the production method, in the cracking and reforming reaction step, the feedstock oil is preferably reacted in a state where a saturated hydrocarbon having 1 to 3 carbon atoms is co-present with the feedstock oil.

In addition, in the production method, in the cracking and reforming reaction step, it is preferable that two or more fixed-bed reactors be used and a cracking and reforming reaction and reproduction of the catalyst for producing an olefin and a monocyclic aromatic hydrocarbon be alternately or sequentially repeated while the reactors are periodically switched.

In addition, in the production method, the crystalline aluminosilicate contained in the catalyst for producing an olefin and a monocyclic aromatic hydrocarbon used in the cracking and reforming reaction step preferably includes a medium-pore zeolite and/or a large-pore zeolite as a main component.

In addition, in the production method, the catalyst for producing an olefin and a monocyclic aromatic hydrocarbon used in the cracking and reforming reaction step contains phosphorous.

An apparatus for producing ethylene is described which includes a cracking furnace;
a product collection device that separates and collects hydrogen, ethylene, propylene, a C4 fraction, and a fraction containing a monocyclic aromatic hydrocarbon having 6 to 8 carbon atoms respectively from a cracked product produced in the cracking furnace;
a cracking and reforming reaction device in which an oil which is a thermally-cracked heavy oil obtained in the cracking furnace and has a 90 volume% distillate temperature, as a distillation characteristic, of 390°C or lower is used as a feedstock oil, the feedstock oil is brought into contact with a catalyst for producing an olefin and a monocyclic aromatic hydrocarbon containing crystalline aluminosilicate, and is reacted, thereby obtaining a product containing an olefin having 2 to 4 carbon atoms and a monocyclic aromatic hydrocarbon having 6 to 8 carbon atoms; and
product supply means for supplying part or all of the product obtained in the cracking and reforming reaction device to the product collection device.

In addition, the production apparatus preferably further includes, upstream of the cracking and reforming reaction device, a hydrogenation reaction device that partially hydrogenates part or all of the feedstock oil.

In addition, in the production apparatus, it is preferable that the product supply means be configured to supply part of the product obtained in the cracking and reforming reaction device to the product collection device and the apparatus further includes recycling means for returning a heavy fraction having 9 or more carbon atoms from the product obtained in the cracking and reforming reaction device to the cracking and reforming reaction device.

In addition, in the production apparatus, it is preferable that the cracking and reforming reaction device includes two or more fixed-bed reactors and be configured to alternately or sequentially repeat a cracking and reforming reaction and reproduction of the catalyst for producing an olefin and a monocyclic aromatic hydrocarbon while periodically switching the reactors.

### Advantageous Effects of Invention

According to the method for producing an olefin and a monocyclic aromatic hydrocarbon, it is possible to produce light olefins with higher production efficiency while suppressing an increase in the cost and, furthermore, to efficiently produce BTX as well.

### Brief Description of Drawings

FIG. 1 is a view for illustrating an embodiment of an apparatus for producing ethylene according to the present invention.
FIG. 2 is a view for illustrating a cracking and reforming process of the apparatus for producing ethylene illustrated in FIG. 1.

### Description of Embodiments

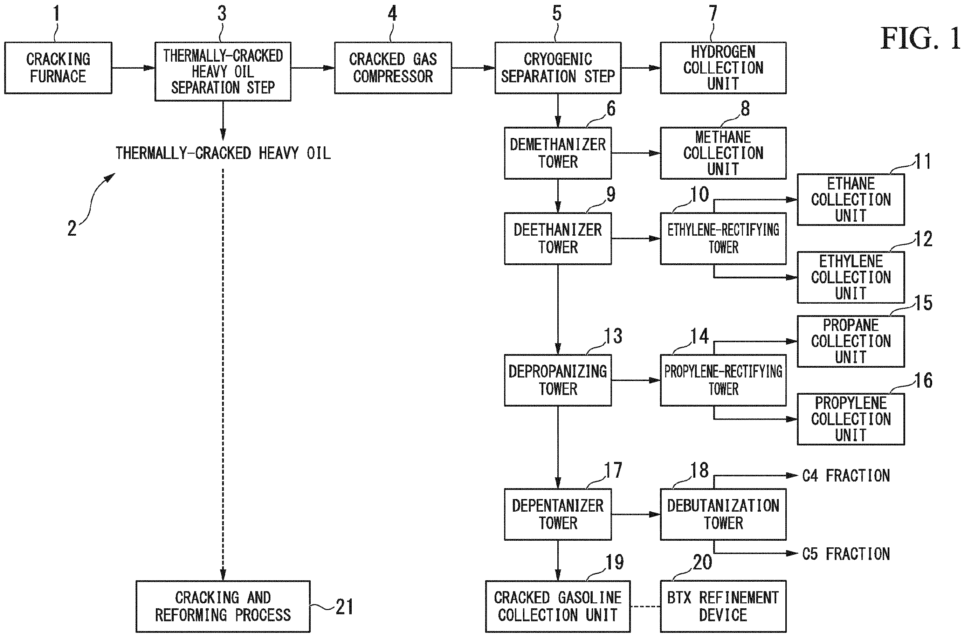

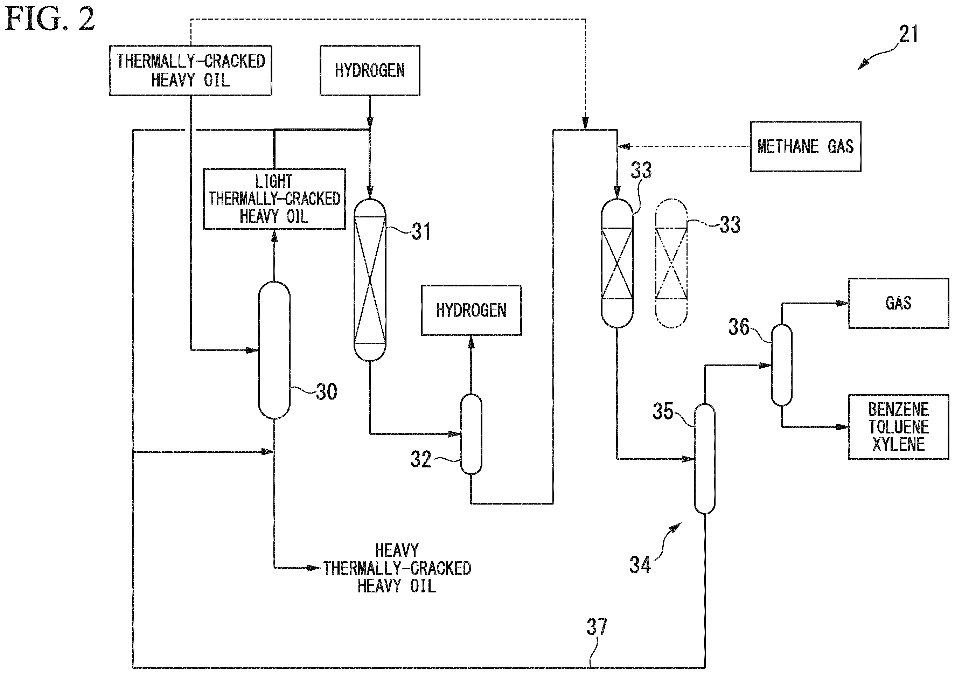

Hereinafter, the present invention will be described in detail with reference to the accompanying drawings. FIG. 1 is a view for illustrating an embodiment of an apparatus for producing ethylene according to the present invention and FIG. 2 is a view for illustrating a cracking and reforming process, that is, a new process part of the present application, of the apparatus for producing ethylene illustrated in FIG. 1.

First, the schematic configuration of the embodiment of the apparatus for producing ethylene and a process according to a production method of the present invention will be described with reference to FIG. 1.

In the embodiment of the apparatus for producing ethylene described herein, parts other than the cracking and reforming process illustrated in FIG. 2 may be a well-known apparatus for producing ethylene including a cracking step and a separation and refinement step and the apparatus for producing ethylene described in NPL 1 can be an example thereof. Therefore, an apparatus produced by adding the cracking and reforming process of the present invention to the existing apparatus for producing ethylene is also included.

The apparatus for producing ethylene described herein is also called a steam cracker, a steam cracking device, or the like and, as illustrated in FIG. 1, includes a cracking furnace 1 and a product collection device 2 that separates and collects hydrogen, ethylene, propylene, a C4 fraction, and a fraction containing a monocyclic aromatic hydrocarbon having 6 to 8 carbon atoms (BTX fraction: cracked gasoline) respectively from a cracked product produced in the cracking furnace 1.

The cracking furnace 1 thermally cracks feedstocks such as a naphtha fraction, a kerosene fraction, and a light fraction, produces hydrogen, ethylene, propylene, a C4 fraction, and a BTX fraction, and produces a thermally-cracked heavy oil as a residual oil (bottom oil) heavier than the BTX fraction. The thermally-cracked heavy oil is also called a heavy aromatic residue oil (HAR oil) in some cases. The operation conditions of the cracking furnace 1 are not particularly limited and the cracking furnace can be operated under ordinary conditions. For example, diluted water vapor is used as a feedstock and the cracking furnace is operated at a thermal cracking reaction temperature in a range of 770°C to 850°C and a retention time (reaction time) in a range of 0.1 seconds to 0.5 seconds. When the thermal cracking temperature is lower than 770°C, cracking does not proceed and a target product cannot be obtained and thus the lower limit of the thermal cracking reaction temperature is more preferably 775°C or higher and still more preferably 780°C or higher. On the other hand, when the thermal cracking temperature exceeds 850°C, the amount of gas generated abruptly increases and hindrance is caused in the operation of the cracking furnace 1 and thus the upper limit of the thermal cracking reaction temperature is more preferably 845°C or lower and still more preferably 840°C or lower. The steam/feedstock (mass ratio) is desirably in a range of 0.2 to 0.9, more desirably in a range of 0.25 to 0.8, and still more desirably in a range of 0.3 to 0.7. The retention time (reaction time) of the feedstock is more desirably in a range of 0.15 seconds to 0.45 seconds and still more desirably in a range of 0.2 seconds to 0.4 seconds.

The product collection device 2 includes a thermally-cracked heavy oil separation step 3 and further includes individual collection units that separate and collect hydrogen, ethylene, propylene, a C4 fraction, and a fraction containing a monocyclic aromatic hydrocarbon having 6 to 8 carbon atoms (BTX fraction: cracked gasoline) respectively.

The thermally-cracked heavy oil separation step 3 is a distillation tower that separates a cracked product obtained in the cracking furnace 1 into a component having a higher boiling point and a component having a lower boiling point on the basis of a specific boiling point before the beginning of main distillation. The lower boiling point component separated in the thermally-cracked heavy oil separation step 3 is extracted in a gas form and is pressurized using a cracked gas compressor 4. The specific boiling point is set so that the target products of the apparatus for producing ethylene, that is, hydrogen, ethylene, propylene, furthermore, a C4 fraction, and cracked gasoline (BTX fraction), are mainly included in the lower boiling point component.

In addition, the higher boiling point component (bottom fraction) separated in the thermally-cracked heavy oil separation step 3 becomes the thermally-cracked heavy oil and may be further separated as necessary. For example, a gasoline fraction, a light thermally-cracked heavy oil, a heavy thermally-cracked heavy oil, and the like can be separated and collected using the distillation tower or the like.

Gas (cracked gas) that has been separated in the thermally-cracked heavy oil separation step 3 and has been pressurized using the cracked gas compressor 4 is separated into hydrogen and a component having a higher boiling point than hydrogen in a cryogenic separation step 5 after washing or the like. Next, the component having a higher boiling point than hydrogen is supplied to a demethanizer tower 6 and methane is separated and collected. In addition to the above-described configuration, a hydrogen collection unit 7 and a methane collection unit 8 are formed on the downstream side of the cryogenic separation step 5. The collected hydrogen and methane are both used in a cracking and reforming process 21 described below.

The higher boiling point component separated in the demethanizer tower 6 is supplied to a deethanizer tower 9. Ethylene, ethane, and a component having a higher boiling point than ethylene and ethane are separated in the deethanizer tower 9. The ethylene and ethane separated in the deethanizer tower 9 are separated into ethylene and ethane using an ethylene-rectifying tower 10 and the ethylene and ethane are collected respectively. In addition to the above-described configuration, an ethane collection unit 11 and an ethylene collection unit 12 are formed on the downstream side of the ethylene-rectifying tower 10.

The collected ethylene becomes a main product that is produced using the apparatus for producing ethylene. In addition, the collected ethane can also be supplied to the cracking furnace 1 together with the feedstocks such as a naphtha fraction, a kerosene fraction, and a light fraction and be recycled.

The higher boiling point component separated in the deethanizer tower 9 is supplied to a depropanizing tower 13. In addition, propylene, propane, and a component having a higher boiling point that propylene and propane are separated in the depropanizing tower 13. From the propylene and propane separated in the depropanizing tower 13, the propylene is rectified and separated using a propylene-rectifying tower 14 and is collected. In addition to the above-described configuration, a propane collection unit 15 and a propylene collection unit 16 are formed on the downstream side of the propylene-rectifying tower 14. The collected propylene also becomes a main product that is produced using the apparatus for producing ethylene together with ethylene.

The higher boiling point component separated in the depropanizing tower 13 is supplied to a depentanizer tower 17. In addition, a component having 5 or less carbon atoms and a component having a higher boiling point than the above-described component, that is, a component having 6 or more carbon atoms, are separated in the depentanizer tower 17. The component having 5 or less carbon atoms separated in the depentanizer tower 17 is separated into a C4 fraction mainly made of a component having 4 carbon atoms and a fraction mainly made of a component having 5 carbon atoms in a debutanization tower 18 and the fractions are collected respectively. The component having 4 carbon atoms separated in the debutanization tower 18 can also be additionally supplied to an extraction and distillation device or the like, be separated into butadiene, butane, isobutane, and butylene, and these substances can be collected respectively. In addition to the above-described configuration, a butylene collection unit (not illustrated) is formed on the downstream side of the debutanization tower 18.

The higher boiling point component separated in the depentanizer tower 17, that is, the component having 6 or more carbon atoms, mainly contains a monocyclic aromatic hydrocarbon having 6 to 8 carbon atoms and is thus collected as cracked gasoline. In addition to the above-described configuration, a cracked gasoline collection unit 19 is formed on the downstream side of the depentanizer tower 17.

The cracked gasoline (BTX fraction) collected in the cracked gasoline collection unit 19 is supplied to a BTX refinement device 20 that separates the cracked gasoline into benzene, toluene, and xylene and then collects them respectively. Here, benzene, toluene, and xylene can also be respectively separated and collected and the BTX refinement device is desirably installed from the viewpoint of the production of chemical goods.

At this time, a component (C9+) having 9 or more carbon atoms contained in the cracked gasoline is separated from the BTX fraction and is collected in the BTX refinement device 20. It is also possible to install a device for separation in the BTX refinement device 20. The component having 9 or more carbon atoms can be used as a feedstock oil for producing an olefin and BTX described below similar to the thermally-cracked heavy oil separated in the thermally-cracked heavy oil separation step 3.

Next, an embodiment of the method for producing a hydrocarbon using the apparatus for producing ethylene, that is, a method for producing an olefin having 2 to 4 carbon atoms and a monocyclic aromatic hydrocarbon having 6 to 8 carbon atoms according to the present invention, will be described with reference to FIGS. 1 and 2.

The apparatus for producing ethylene described herein is an apparatus that, as illustrated in FIG. 1, produces an olefin and a BTX fraction in the cracking and reforming process 21 using the thermally-cracked heavy oil (HAR oil) separated and collected in the thermally-cracked heavy oil separation step 3, that is, mainly a hydrocarbon (aromatic hydrocarbon) having 9 or more carbon atoms heavier than the BTX fraction as a feedstock oil. In addition, it is also possible to use a heavy oil remaining after the collection of the BTX fraction from the cracked gasoline collection unit 19 as a feedstock.

In the latter part of the thermally-cracked heavy oil separation step 3, a part of fractions generated after the separation of the thermally-cracked heavy oil into a plurality of fractions or an oil remaining after other chemical goods or fuels are produced from the separated fractions is also a part of a residual oil (bottom oil) obtained from the cracking furnace 1 and is thus contained in the thermally-cracked heavy oil of the present invention, that is, a thermally-cracked heavy oil obtained from the apparatus for producing ethylene. Examples of the production of chemical goods or fuels from the separated fractions include the production of a petroleum resin from a light thermally-cracked heavy oil having approximately 9 or 10 carbon atoms. In addition, a part of fractions generated during the separation of a heavy oil fraction obtained by collecting the BTX fraction from the cracked gasoline collection unit 19 into a plurality of fractions or an oil remaining after other chemical goods or fuels are produced from the separated fractions is also, similarly, contained in the thermally-cracked heavy oil.

In the present embodiment, the apparatus has a configuration illustrated in FIG. 2 in order to carry out the cracking and reforming process 21. The configuration of the apparatus illustrated in FIG. 2 is intended to produce an olefin having 2 to 4 carbon atoms and a monocyclic aromatic hydrocarbon having 6 to 8 carbon atoms (BTX fraction) in which a thermally-cracked heavy oil obtained from the apparatus for producing ethylene is used as a feedstock oil and the olefin or BTX fraction is produced.

### (Characteristics of thermally-cracked heavy oil)

While there is no particular specification, the thermally-cracked heavy oil in the present invention preferably has the following characteristics.

Characteristics obtained from a distillation test significantly vary depending on the cracking temperature or the cracking feedstock, but the 10 volume% distillate temperature (T10) is preferably in a range of 145°C to 230°C. The 90 volume% distillate temperature (T90) and the end point vary more significantly depending on fractions being used and thus there is no limitation. However, when a fraction directly obtained from the thermally-cracked heavy oil separation step 3 is used, for example, the 90 volume% distillate temperature (T90) is preferably in a range of 400°C to 600°C and the end point (EP) is preferably in a range of 450°C to 800°C.

It is preferable that the density at 15°C is in a range of 1.03 g/cm³ to 1.08 g/cm³, the kinematic viscosity at 50°C is in a range of 20 mm²/s to 45 mm²/s, the content of sulfur (sulfur component) is in a range of 200 ppm by mass to 700 ppm by mass, the content of nitrogen (nitrogen component) is 20 ppm by mass or less, and the aromatic component is 80% by volume or more.

Here, the distillation test refers to a test in which characteristics are measured according to "Testing Method For Distillation Of Petroleum Products" described in JIS K 2254, the density at 15°C refers to the density measured according to "Vibrating Density Testing Method" of "Crude Petroleum And Petroleum Products-Determination Of Density And Petroleum Measurement Tables (excerpt)" described in JIS K 2249, the kinematic viscosity at 50°C refers to a value obtained according to JIS K 2283 "Crude Petroleum And Petroleum Products-Determination Of Kinematic Viscosity And Calculation Method For Viscosity Index Of Crude Oil And Petroleum Products", the content of sulfur refers to the content of sulfur measured according to "Energy-Dispersive X-Ray Fluorescence Method" of "Crude Petroleum And Petroleum Products-Determination Of Sulfur Content" described in JIS K 2541-1992, the content of nitrogen refers to the content of nitrogen measured according to "Crude Petroleum And Petroleum Products-Determination Of Nitrogen Content" according to JIS K 2609, and the aromatic component refers to the content of total aromatic components measured using Japan Petroleum Institute Standard JPI-5S-49-97 "Hydrocarbon Type Testing Method For Petroleum Products Using High Performance Liquid Chromatography", respectively.

However, in the present invention, the thermally-cracked heavy oil is not directly used as a feedstock oil. The thermally-cracked heavy oil is distilled and separated in advance at a predetermined cut temperature (the 90 volume% distillate temperature is 390°C) in an early distillation tower 30 illustrated in FIG. 2 and is separated into a light fraction (light thermally-cracked heavy oil) and a heavy fraction (heavy thermally-cracked heavy oil). In addition, a light fraction as described below is used as the feedstock oil. The heavy fraction is separately stored and is used as, for example, a fuel.

### (Feedstock oil)

The feedstock oil according to the present invention is an oil which is a thermally-cracked heavy oil obtained from the apparatus for producing ethylene and has a 90 volume% distillate temperature, as a distillation characteristic, of 390°C or lower. That is, a light thermally-cracked heavy oil which has been distilled in the early distillation tower 30 and has a 90 volume% distillate temperature, which is a distillation characteristic, adjusted to 390°C or lower is used as the feedstock oil. When the 90 volume% distillate temperature is set to 390°C or lower as described above, an aromatic hydrocarbon having 9 to 12 carbon atoms becomes the main component of the feedstock oil and, in a cracking and reforming reaction step in which the contact and reaction with a catalyst for producing an olefin and a monocyclic aromatic hydrocarbon described below are carried out, it is possible to increase the yield of an olefin and a BTX fraction. In addition, in order to further increase the yield of an olefin and a BTX fraction, it is preferable that the 10 volume% distillate temperature (T10) is in a range of 140°C to 220°C and the 90 volume% distillate temperature (T90) is in a range of 220°C to 380°C and it is more preferable that T10 is in a range of 160°C to 200°C and T90 is in a range of 240°C to 350°C.

In a case in which the 90 volume% distillate temperature (T90), which is a distillation characteristic, of the feedstock oil is 390°C or lower when the feedstock oil is provided to the cracking and reforming process 21, it is not always necessary to carry out the distillation treatment in the early distillation tower 30.

Here, the distillation characteristics are measured according to "Testing Method For Distillation Of Petroleum Products" described in JIS K 2254.

The feedstock oil according to the present invention may include other base materials as long as the feedstock oil includes the thermally-cracked heavy oil obtained from the apparatus for producing ethylene.

As the feedstock oil according to the present invention, in addition to the light thermally-cracked heavy oil obtained by the distillation treatment in the early distillation tower 30, the component (aromatic hydrocarbon) having 9 or more carbon atoms separated and collected in the cracked gasoline collection unit 19 as described above can also be used.

In addition, for the fraction having a 90 volume% distillate temperature (T90), which is a distillation characteristic, adjusted to 390°C or lower, it is not always necessary to carry out distillation in the early distillation tower 30.

Part or all of the feedstock oil obtained as described above is partially hydrogenated using the hydrogenation reaction device 31. That is, part or all of the feedstock oil is provided to a hydrogenation reaction step.

In the present embodiment, only the light thermally-cracked heavy oil, that is, only part of the feedstock oil, is partially hydrogenated. On a component mainly containing a hydrocarbon having 9 carbon atoms or a component having 9 or more carbon atoms separated and collected in the cracked gasoline collection unit 19 out of a part of fractions generated during the separation of the thermally-cracked heavy oil into a plurality of fractions or an oil remaining after other chemical goods or fuels are produced from the separated fractions, the hydrogenation treatment may not be carried out. However, it is needless to say that, even on the above-described components, the partial hydrogenation treatment may be carried out using the hydrogenation reaction device 31.

### (Hydrogenation treatment of feedstock oil)

In the thermally-cracked heavy oil obtained from the apparatus for producing ethylene, generally, the content of the aromatic hydrocarbon is extremely large. Therefore, in the present embodiment, a necessary fraction in the previously-separated thermally-cracked heavy oil, that is, light HAR, is used as the feedstock oil and this feedstock oil is hydrogenated in the hydrogenation reaction device 31 (hydrogenation reaction step). However, in order to hydrogenate the feedstock oil until the feedstock oil is hydrocracked, a large amount of hydrogen is required and the use of the fully-hydrogenated feedstock oil extremely decreases the production efficiency of an olefin and a BTX fraction in the cracking and reforming reaction step in which the contact and reaction with a catalyst for producing an olefin and a monocyclic aromatic hydrocarbon described below are carried out.

Therefore, in a hydrogenation reaction step (hydrogenation reaction device 31) of the present embodiment, the feedstock oil is only partially hydrogenated instead of being fully hydrogenated. That is, mainly bicyclic aromatic hydrocarbon in the feedstock oil is selectively hydrogenated and is converted to a monocyclic aromatic hydrocarbon (naphthenobenzene or the like) in which only one aromatic ring is hydrogenated. Here, examples of the monocyclic aromatic hydrocarbon include indane, tetralin, alkylbenzene, and the like.

When the feedstock oil is partially hydrogenated as described above, the amount of hydrogen consumed in the hydrogenation reaction step is suppressed and, simultaneously, the amount of heat generated during the treatment can also be suppressed. For example, when naphthalene, which is a typical example of the bicyclic aromatic hydrocarbon, is hydrogenated to decalin, the amount of hydrogen consumed per mole of naphthalene reaches 5 moles; however, in a case in which naphthalene is hydrogenated to tetralin, naphthalene can be hydrogenated with an amount of hydrogen consumed of 2 moles, which becomes realizable. In addition, while there is a large amount of a fraction containing indenes in the feedstock oil (thermally-cracked heavy oil), the amount of hydrogen consumed necessary to hydrogenate the fraction to indanes is far smaller than the amount of hydrogen necessary to hydrogenate naphthalene to decalin. Therefore, it becomes possible to more efficiently convert the bicyclic aromatic hydrocarbon in the feedstock oil to naphthenobenzenes.

As the hydrogen used in the hydrogenation reaction step, hydrogen collected in the hydrogen collection unit 7 can be used. That is, when hydrogen collected in the hydrogen collection unit 7 is supplied to the hydrogenation reaction device 31, the hydrogenation treatment is carried out. Therefore, hydrogen generated in the same apparatus for producing ethylene is used and thus it is possible to suppress the space or cost required for the storage or transportation of hydrogen to the minimum level.

As the hydrogenation reaction device 31 that carries out the above-described hydrogenation treatment, a well-known hydrogenation reactor can be used. In the hydrogenation reaction step in which the hydrogenation reaction device 31 (hydrogenation reactor) is used, the hydrogen partial pressure at the reactor inlet is in a range of 1 MPa to 9 MPa. The lower limit is more preferably 1.2 MPa or more and still more preferably 1.5 MPa or more. In addition, the upper limit is more preferably 7 MPa or less and still more preferably 5 MPa or less. In a case in which the hydrogen partial pressure is less than 1 MPa, coke is vigorously generated on the catalyst and the catalyst life becomes short. On the other hand, in a case in which the hydrogen partial pressure exceeds 9 MPa, more bicyclic aromatic hydrocarbons are fully hydrogenated so that both rings in the hydrocarbon are hydrogenated and the amount of hydrogen consumed significantly increases and thus there is a concern that the economic efficiency may be impaired due to a decrease in the yield of the monocyclic aromatic hydrocarbon and an increase in the building costs for the hydrogenation reactor or peripheral equipment.

The liquid hourly space velocity (LHSV) of the hydrogenation reaction step by the hydrogenation reaction device 31 is preferably in a range of 0.05 h⁻¹ to 10 h⁻¹. The lower limit is more preferably 0.1 h⁻¹ or more and still more preferably 0.2 h⁻¹ or more. In addition, the upper limit is more preferably 5 h⁻¹ or less and more preferably 3 h⁻¹ or less. In a case in which the LHSV is less than 0.05 h⁻¹, the building cost of the reactor becomes excessive and there is a concern that the economic efficiency may be impaired. On the other hand, in a case in which the LHSV exceeds 10 h⁻¹, the hydrogenation treatment of the feedstock oil does not sufficiently proceed and there is a possibility that the target hydride may not be obtained.

The reaction temperature (hydrogenation temperature) in the hydrogenation reaction step by the hydrogenation reaction device 31 is in a range of 150°C to 400°C. The lower limit is more preferably 170°C or higher and still more preferably 190°C or higher. In addition, the upper limit is more preferably 380°C or lower and still more preferably 370°C or lower. In a case in which the reaction temperature is below 150°C, there is a tendency that the feedstock oil is not sufficiently hydrogenated. On the other hand, in a case in which the reaction temperature exceeds 400°C, the generation of a gas component, which is a byproduct, increases and thus the yield of a hydrogenated oil decreases, which is not desirable.

The hydrogen/oil ratio in the hydrogenation reaction step by the hydrogenation reaction device 31 is preferably in a range of 100 NL/L to 2000 NL/L. The lower limit is more preferably 110 NL/L or more and still more preferably 120 NL/L or more. In addition, the upper limit is more preferably 1800 NL/L or less and still more preferably 1500 NL/L or less. In a case in which the hydrogen/oil ratio is less than 100 NL/L, the generation of coke on the catalyst in the reactor outlet proceeds and there is a tendency that the catalyst life becomes short.

On the other hand, in a case in which the hydrogen/oil ratio exceeds 2000 NL/L, the building cost of a recycling compressor becomes excessive and there is a concern that the economic efficiency may be impaired.

There is no particular limitation regarding the reaction format in the hydrogenation treatment by the hydrogenation reaction device 31, generally, the reaction format can be selected from a variety of processes such as a fixed bed and a movable bed and, among them, the fixed bed is preferred. In addition, the hydrogenation reaction device 31 preferably has a tower shape.

A catalyst for the hydrogenation treatment which is housed in the hydrogenation reaction device 31 and is used for the hydrogenation treatment of the feedstock oil is not limited as long as the catalyst is capable of selectively hydrogenating and converting bicyclic aromatic hydrocarbons in the feedstock oil to monocyclic aromatic hydrocarbons (naphthenobenzenes or the like) in which only one aromatic ring is hydrogenated. A catalyst for the hydrogenation treatment contains at least one metal selected from Group 6 metals in the periodic table and at least one metal selected from Groups 8 to 10 metals in the periodic table. The Group 6 metal in the periodic table is preferably molybdenum, tungsten, or chromium and particularly preferably molybdenum or tungsten. The Groups 8 to 10 metal is preferably iron, cobalt, or nickel and more preferably cobalt or nickel. These metals may be singly used or a combination of two or more metals may be used. Specific examples of the combination that is preferably used include molybdenum-cobalt, molybdenum-nickel, tungsten-nickel, molybdenum-cobalt-nickel, tungsten-cobalt-nickel, and the like. The periodic table refers to the extended periodic table specified by the International Union of Pure and Applied Chemistry (IUPAC).

The catalyst for the hydrogenation treatment is a catalyst obtained by supporting the above-described metals in an inorganic carrier containing aluminum oxide. Preferable examples of the inorganic carrier containing aluminum oxide include carriers obtained by adding a porous inorganic compound such as a variety of clay minerals such as alumina, alumina-silica, alumina-boria, alumina-titania, alumina-zirconia, alumina-magnesia, alumina-silica-zirconia, alumina-silica-titania, a variety of zeolites, sebiolite, and montmorillonite to alumina and, among them, alumina is particularly preferred. The inorganic carrier made of a plurality of metal oxides such as alumina-silica described above may be a pure mixture of those oxides or a composite oxide.

The catalyst for the hydrogenation treatment is a catalyst obtained by supporting at least one metal selected from Group 6 metals in the periodic table in a range of 10% by mass to 30% by mass and at least one metal selected from Groups 8 to 10 metals in the periodic table in a range of 1% by mass to 7% by mass in an inorganic carrier containing aluminum oxide in relation to the total catalyst mass which is the total mass of the inorganic carrier and the metals. In a case in which the support amount of the Group 6 metals in the periodic table and the support amount of the Groups 8 to 10 metals in the periodic table are less than the respective lower limits, there is a tendency that the catalyst does not exhibit sufficient hydrogenation treatment activity and, on the other hand, in a case in which the support amounts exceed the respective upper limits, the catalyst cost increases, the supported metals are likely to be agglomerated or the like, and there is a tendency that the catalyst does not exhibit sufficient hydrogenation treatment activity.

There is no particular limitation regarding the precursor of the metallic species used to support the metals in the inorganic carrier, the inorganic salts, organic metal compounds, or the like of the metals are used, and water-soluble inorganic salts are preferably used. In a supporting step, the metals are supported in the inorganic carrier using a solution, preferably an aqueous solution, of the metal precursor. As a supporting operation, for example, a well-known method such as an immersion method, an impregnation method, or a co-precipitation method is preferably employed.

It is preferable that the carrier in which the metal precursor is supported is fired after being dried, preferably in the presence of oxygen, and the metallic species is, first, made to form an oxide. Furthermore, it is preferable, before the hydrogenation treatment of the feedstock oil, to form a sulfide with the metal species through a sulfurization treatment called preliminary sulfurization.

There is no particular limitation regarding the conditions of the preliminary sulfurization, but it is preferable that a sulfur compound is added to a petroleum fraction or a thermally-cracked heavy oil (hereinafter, referred to as the preliminary sulfurization feedstock oil) and the compound is continuously brought into contact with the catalyst for the hydrogenation treatment under conditions of a temperature in a range of 200°C to 380°C, LHSV in a range of 1 h⁻¹ to 2 h⁻¹, a pressure applied at the same time as the operation of the hydrogenation treatment, and a treatment time of 48 hours or longer. The sulfur compound added to the preliminary sulfurization feedstock oil is not particularly limited and is preferably dimethyl disulfide (DMDS), sulfazole, hydrogen sulfide, or the like, and approximately 1% by mass of the sulfur compound in terms of the mass of the preliminary sulfurization feedstock oil is preferably added to the preliminary sulfurization feedstock oil.

### (Hydrogenated oil of feedstock oil)

The hydrogenated oil of the feedstock oil obtained from the hydrogenation reaction device 31 (hydrogenation reaction step) described above preferably has the following characteristics.

Regarding the distillation characteristics, it is preferable that the 10 volume% distillate temperature (T10) is in a range of 140°C to 200°C and the 90 volume% distillate temperature (T90) is in a range of 200°C to 390°C and it is more preferable that T10 is in a range of 160°C to 190°C and T90 is in a range of 210°C to 370°C. When T10 is lower than 140°C, the formed feedstock oil containing the hydrogenated oil may contain xylene which is one of the target substances, which is not preferable. On the other hand, when T90 exceeds 390°C (the hydrogenated oil becomes a heavy oil), the catalyst performance is degraded due to the metal poisoning of the hydrogenation treatment catalyst, coke precipitation, and the like, the inhibition of predetermined performance due to an increase in coke precipitation in the catalyst for producing an olefin and a monocyclic aromatic hydrocarbon described below, and an increase in the amount of hydrogen consumed which is not economical, which is not preferable.

The hydrogenated oil of the feedstock oil is supplied to a cracking and reforming reaction device 33 after hydrogen is removed in a dehydrogenation tower 32 provided behind the hydrogenation reaction device as illustrated in FIG. 2 and is thus supplied to the cracking and reforming reaction step. In addition, it is also possible to directly supply a fraction mainly containing a hydrocarbon having approximately 9 or 10 carbon atoms which does not contain many polycyclic aromatics and has little need of hydrogenation to the cracking and reforming reaction device 33 together with the hydrogenated oil.

A heating furnace (not illustrated) is provided between the dehydrogenation tower 32 and the cracking and reforming reaction device 33 and the hydrogenated oil of the feedstock oil or the C9 fraction is heated to a predetermined temperature as a pretreatment. That is, when brought into contact with the catalyst in the cracking and reforming reaction device 33, the feedstock oil or the like is preferably in a gaseous state and thus the feedstock oil is heated in the heating furnace and is thus put into a gaseous state or similar state. In addition, hydrogen removed and collected from the dehydrogenation tower 32 can be returned again to the hydrogenation reaction device 31 and be subjected to a hydrogenation treatment and it is also possible to collect hydrogen again in the apparatus for producing ethylene.

Since the cracking and reforming reaction device 33 houses the catalyst for producing an olefin and a monocyclic aromatic hydrocarbon, in the cracking and reforming reaction device, the supplied feedstock oil (containing the hydrogenated oil) is brought into contact with the catalyst, the feedstock oil and the catalyst are reacted together, and a product containing an olefin having 2 to 4 carbon atoms and a monocyclic aromatic hydrocarbon having 6 to 8 carbon atoms is obtained.

### (Catalyst for producing olefin and monocyclic aromatic hydrocarbon)

The catalyst for producing an olefin and a monocyclic aromatic hydrocarbon contains crystalline aluminosilicate. The content of the crystalline aluminosilicate in the catalyst may be determined depending on the reactivity or selectivity of a required cracking and reforming reaction or the shape and strength of the catalyst and is not particularly limited, but is preferably in a range of 10% by mass to 100% by mass. The catalyst is used in a fixed-bed reactor and thus may be a catalyst only made of the crystalline aluminosilicate. When a binder is added in order to increase the strength, the content of the crystalline aluminosilicate is preferably in a range of 20% by mass to 95% by mass and more preferably in a range of 25% by mass to 90% by mass. However, when the content of the crystalline aluminosilicate is below 10%, the amount of the catalyst necessary to obtain sufficient catalytic activity becomes excessive, which is not preferable.

### [Crystalline aluminosilicate]

The crystalline aluminosilicate preferably includes a medium-pore zeolite and/or a large-pore zeolite as a main component since the yield of a monocyclic aromatic hydrocarbon can be further increased.

The medium-pore zeolite is a zeolite having a 10-membered ring skeleton structure and examples of the medium-pore zeolite include zeolites having an AEL-type, EUO-type, FER-type, HEU-type, MEL-type, MFI-type, NES-type, TON-type, or WEI-type crystal structure. Among them, since the yield of a monocyclic aromatic hydrocarbon can be further increased, a zeolite having the MFI-type crystal structure is preferred.

The large-pore zeolite is a zeolite having a 12-membered ring skeleton structure and examples of the large-pore zeolite include zeolites having an AFI-type, ATO-type, BEA-type, CON-type, FAU-type, GME-type, LTL-type, MOR-type, MTW-type, or OFF-type crystal structure. Among them, zeolites having the BEA-type, FAU-type, or MOR-type crystal structure are preferred since they can be industrially used and a zeolite having the BEA-type crystal structure is preferred since the yield of a monocyclic aromatic hydrocarbon can be further increased.

In addition to the medium-pore zeolite and/or the large-pore zeolite, the crystalline aluminosilicate may contain a small-pore zeolite having a 10 or less-membered ring skeleton structure and an ultralarge-pore zeolite having a 14 or more-membered skeleton structure.

Here, examples of the small-pore zeolite include zeolites having an ANA-type, CHA-type, ERI-type, GIS-type, KFI-type, LTA-type, NAT-type, PAU-type, and YUG-type crystal structure.

Examples of the ultralarge-pore zeolite include zeolites having a CLO-type or VPI-type crystal structure.

In addition, in the crystalline aluminosilicate, the molar ratio (Si/Al ratio) of silicon to aluminum is 100 or less and preferably 50 or less. When the Si/Al ratio of the crystalline aluminosilicate exceeds 100, the yield of a monocyclic aromatic hydrocarbon becomes low.

In addition, the Si/Al ratio of the crystalline aluminosilicate is preferably 10 or more in order to obtain a sufficient yield of a monocyclic aromatic hydrocarbon.

The catalyst for producing an olefin and a monocyclic aromatic hydrocarbon according to the present invention may further contain potassium and/or zinc. When the catalyst contains potassium and/or zinc, a more efficient BTX production can be expected.

Examples of the crystalline aluminosilicate containing potassium and/or zinc include crystalline aluminosilicate having gallium incorporated into the lattice skeleton (crystalline aluminogallosilicate), crystalline aluminosilicate having zinc incorporated into the lattice skeleton (crystalline aluminozincosilicate), crystalline aluminosilicate having gallium supported therein (Ga-supported crystalline aluminosilicate), crystalline aluminosilicate having zinc supported therein (Zn-supported crystalline aluminosilicate), and crystalline aluminosilicate containing at least one thereof.

The Ga-supported crystalline aluminosilicate and/or the Zn-supported crystalline aluminosilicate are crystalline aluminosilicates in which gallium and/or zinc are supported using a well-known method such as an ion exchange method or an impregnation method. There is no particular limitation regarding a gallium source and a zinc source used at this time and examples thereof include gallium salts such as gallium nitrate and gallium chloride, zinc salts such as gallium oxide, zinc nitrate, and zinc chloride, zinc oxide, and the like.

The upper limit of the content of gallium and/or zinc in the catalyst is preferably 5% by mass or less, more preferably 3% by mass or less, still more preferably 2% by mass or less, and still more preferably 1% by mass or less in a case in which the total amount of the catalyst is considered as 100% by mass.

When the content of gallium and/or zinc exceeds 5% by mass, the yield of a monocyclic aromatic hydrocarbon becomes low, which is not preferable.

In addition, the lower limit of the content of gallium and/or zinc is preferably 0.01% by mass or more and more preferably 0.1% by mass or more in a case in which the total amount of the catalyst is considered as 100% by mass. When the content of gallium and/or zinc is less than 0.01% by mass, the yield of a monocyclic aromatic hydrocarbon becomes low, which is not preferable.

The crystalline aluminogallosilicate and/or the crystalline aluminozincosilicate are crystalline aluminosilicates having a structure in which the SiO₄, AlO₄, and GaO₄/ZnO₄ structure is tetrahedrally coordinated in the skeleton and can be obtained using gel crystallization through hydrothermal synthesis, a method in which gallium and/or zinc are inserted into the lattice skeleton of the crystalline aluminosilicate, or a method in which aluminum is inserted into the lattice skeleton of the crystalline gallosilicate and/or the crystalline zincosilicate.

The catalyst for producing an olefin and a monocyclic aromatic hydrocarbon contains phosphorous. The content of phosphorous in the catalyst is preferably in a range of 0.1% by mass to 10.0% by mass in a case in which the total amount of the catalyst is considered as 100% by mass. The lower limit of the content of phosphorous is preferably 0.1% by mass or more and more preferably 0.2% by mass or more since a decrease in the yield of a monocyclic aromatic hydrocarbon over time can be prevented. On the other hand, the upper limit of the content of phosphorous is preferably 10.0% by mass or less, more preferably 6.0% by mass or less, and still more preferably 3.0% by mass or less since the yield of a monocyclic aromatic hydrocarbon can be increased.

There is no particular limitation regarding the method for adding phosphorous to the catalyst for producing an olefin and a monocyclic aromatic hydrocarbon and examples thereof include a method in which phosphorous is supported in the crystalline aluminosilicate, the crystalline aluminogallosilicate, or the crystalline aluminozincosilicate using an ion exchange method, an impregnation method, or the like, a method in which a phosphorous compound is added during the synthesis of a zeolite so as to substitute a part of the inside of the skeleton of the crystalline aluminosilicate with phosphorous, a method in which a phosphorous-containing crystal accelerator is used during the synthesis of a zeolite, and the like. An aqueous solution containing phosphoric acid ions which is used during the addition of phosphorous is not particularly limited and an aqueous solution prepared by dissolving phosphoric acid, diammonium hydrogen phosphate, ammonium dihydrogen phosphate, and other water-soluble phosphate, or the like in water at an arbitrary concentration can be preferably used.

The catalyst for producing an olefin and a monocyclic aromatic hydrocarbon can be formed by firing phosphorous-supported crystalline aluminogallosilicate/crystalline aluminozincosilicate, or gallium/zinc and phosphorous-supported crystalline aluminosilicate (at a firing temperature in a range of 300°C to 900°C) as described above.

In addition, the catalyst for producing an olefin and a monocyclic aromatic hydrocarbon is formed in a powder form, a granular form, a pellet form, or the like depending on the reaction format in the cracking and reforming reaction device 33 (cracking and reforming reaction step). For example, in the case of a fixed bed, the catalyst is formed in a granular form or a pellet form and, in the case of a fluidized bed, the catalyst is formed in a powder form.

In a case in which a granular-form or pellet-form catalyst is obtained, it is possible to blend an inactive oxide with the catalyst as a binder as necessary and then shape the catalyst using a variety of shaping devices.

Specifically, in a case in which the catalyst is used in a fixed bed, an inorganic substance such as silica or alumina is preferably used as the binder.

In a case in which the catalyst for producing an olefin and a monocyclic aromatic hydrocarbon contains a binder or the like, a substance containing phosphorous may be used as the binder as long as the content of phosphorous is in the above-described preferable range.

In addition, in a case in which the catalyst for producing an olefin and a monocyclic aromatic hydrocarbon contains a binder, it is also possible to mix the binder and the gallium and/or zinc-supported crystalline aluminosilicate or mix the binder and the crystalline aluminogallosilicate and/or crystalline aluminozincosilicate and then add phosphorous, thereby producing a catalyst.

### [Reaction format]

Examples of the reaction format in the cracking and reforming reaction device 33, that is, the reaction format in which the feedstock oil is brought into contact with the catalyst for producing an olefin and a monocyclic aromatic hydrocarbon using the cracking and reforming reaction device 33, thereby causing a cracking and reforming reaction include a fixed bed, a movable bed, a fluidized bed, and the like.

Particularly, the fixed bed is more preferable than the fluidized bed or the movable bed since the apparatus cost is extremely low. Therefore, while it is still possible to repeat the reaction and reproduction using one fixed-bed reactor, it is preferable to install two or more reactors in order to continuously cause the reaction. In the present embodiment, the fixed-bed cracking and reforming reaction device 33 (fixed-bed reactor) is used and the number of the fixed-bed reactors 33 used is two as illustrated in FIG. 2. In FIG. 2, while two fixed-bed reactors 33 are illustrated, the number of the fixed-bed reactors is not limited thereto and an arbitrary number of the fixed-bed reactors can be installed as long as the number is plural.

In the fixed-bed cracking and reforming reaction device 33, as the cracking and reforming reaction proceeds, coke is attached particularly to the catalyst surface and the activity of the catalyst degrades. When the activity degrades as described above, in the cracking and reforming reaction step (cracking and reforming reaction device 33), while the yield of an olefin having 2 to 4 carbon atoms increases, the yield of a monocyclic aromatic hydrocarbon having 6 to 8 carbon atoms (BTX fraction) decreases and the total amount of the olefin having 2 to 4 carbon atoms and the monocyclic aromatic hydrocarbon having 6 to 8 carbon atoms decreases. Therefore, the reproduction treatment of the catalyst becomes necessary.

In the fixed-bed cracking and reforming reaction device 33 (fixed-bed reactor), since the activity of the catalyst is degraded by the attachment of coke, the reproduction treatment of the catalyst is carried out after the cracking and reforming reaction device is operated for a previously-set predetermined time. That is, two or more cracking and reforming reaction devices 33 (fixed-bed reactors) are used and the cracking and reforming reaction and the reproduction of the catalyst for producing an olefin and a monocyclic aromatic hydrocarbon are repeated by periodically switching the devices. The operation time during which the reaction is continuously operated with one cracking and reforming reaction device 33 varies depending on the size of the device or a variety of operation conditions (reaction conditions) but is in a range of approximately several hours to 10 days. When a large number of the cracking and reforming reaction devices 33 (fixed-bed reactors) are used, it is possible to shorten the continuous operation time of each reactor and to suppress the activity degradation of the catalyst and thus the time necessary for reproduction can be shortened.

### [Reaction temperature]

The reaction temperature when the feedstock oil is brought into contact with and is reacted with the catalyst is in a range of 350°C to 700°C and more preferably in a range of 400°C to 650°C. When the reaction temperature is lower than 350°C, the reaction activity is not sufficient. When the reaction temperature exceeds 700°C, the reaction becomes disadvantageous in terms of energy and the amount of coke generated is significantly increased and thus the
production efficiency of the target substance is decreased.

### [Reaction pressure]

The reaction pressure when the feedstock oil is brought into contact with and is reacted with the catalyst is in a range of 0.1 MPaG to 2.0 MPaG. That is, the feedstock oil is brought into contact with the catalyst for producing an olefin and a monocyclic aromatic hydrocarbon at a pressure in a range of 0.1 MPaG to 2.0 MPaG.

In the present invention, since the reaction concept is completely different from that of a method of the related art in which hydrogenolysis is used, a condition of high pressure, which is preferred in hydrogenolysis, is not required. Conversely, a pressure higher than necessary accelerates cracking and produces unintended light gas as a byproduct, which is not preferable. In addition, the non-necessity of the high-pressure condition is also preferred in terms of the design of the reaction apparatus. Therefore, when the reaction pressure is in a range of 0.1 MPaG to 2.0 MPaG, it is possible to efficiently cause a cracking and reforming reaction.

### [Contact time]

The contact time between the feedstock oil and the catalyst is not particularly limited as long as a desired reaction substantially proceeds and, for example, the gas passing time over the catalyst is in a range of 2 seconds to 150 seconds, more preferably in a range of 3 seconds to 100 seconds, and still more preferably in a range of 5 seconds to 80 seconds. When the contact time is shorter than 5 seconds, a substantial reaction is difficult. When the contact time exceeds 300 seconds, the amount of a carbonaceous material accumulated on the catalyst due to coking or the like increases or the amount of light gas generated by cracking increases and, furthermore, the size of the
device is also increased, which is not preferable.

### [Reproduction treatment]

Once a cracking and reforming reaction treatment (cracking and reforming reaction step) is carried out for a predetermined time using the cracking and reforming reaction device 33, the cracking and reforming reaction treatment is operated using the other cracking and reforming reaction device 33 and, for the cracking and reforming reaction device 33 stopped to be used for the cracking and reforming reaction treatment, the reproduction of the catalyst for producing an olefin and a monocyclic aromatic hydrocarbon having the degraded activity is carried out.

Since the catalyst degradation of the catalyst is mainly caused by the attachment of coke to the catalyst surface, as the reproduction treatment, a treatment to remove coke from the catalyst surface is carried out. Specifically, air is circulated in the cracking and reforming reaction device 33 and coke attached to the catalyst surface is combusted. Since the cracking and reforming reaction device 33 is maintained at a sufficiently high temperature, the coke attached to the catalyst surface is easily combusted simply by circulating air. However, when ordinary air is supplied and circulated in the cracking and reforming reaction device 33, there is a concern of abrupt combustion. Therefore, it is preferable to supply and circulate air having an oxygen concentration decreased by interfusing nitrogen in advance to the cracking and reforming reaction device 33. That is, as the air used in the reproduction treatment, for example, air having an oxygen concentration decreased in a range of approximately several % to 10% is preferably used. In addition, it is not necessary to equal the reaction temperature and the reproduction temperature and preferred temperatures can be appropriately set.

### [Dilution treatment]

In the cracking and reforming reaction treatment in the cracking and reforming reaction device 33, in order to suppress the attachment of coke to the catalyst surface, it is preferable to treat the feedstock oil in a state where a saturated hydrocarbon having 1 to 3 carbon atoms, for example, methane, is provided to the cracking and reforming reaction device 33 as illustrated in FIG. 2 so as to let the methane coexist. Methane is almost unreactive and thus, even when methane is brought into contact with the catalyst in the cracking and reforming reaction device 33, any reaction is not caused. Therefore, for the attachment of a heavy hydrocarbon derived from the feedstock oil to the catalyst surface occurring while the catalyst reaction proceeds, the methane acts as a diluting agent that decreases the concentration of the hydrocarbon on the catalyst surface and thus suppresses (hinders) the attachment. Therefore, the methane suppresses the heavy hydrocarbon derived from the feedstock oil being attached to the catalyst surface so as to become coke.

As the methane provided to the cracking and reforming reaction device 33, methane collected in the methane collection unit 8 is used. That is, the methane collected in the methane collection unit 8 is provided to the cracking and reforming reaction device 33 as a diluting agent. Since methane generated in the same apparatus for producing ethylene is used, it is possible to suppress the space or cost necessary for the storage, transportation, and the like of methane at a minimum level. The methane provided to the cracking and reforming reaction device 33 as described above is heated to a predetermined temperature in the heating furnace (not illustrated) provided on the upper stream side in the cracking and reforming reaction device 33 together with the feedstock oil. Ethane or propane can also be used instead of methane and, among them, methane is more preferably used since the reactivity is lowest and a sufficient amount can be collected in the same apparatus for producing ethylene.

The methane/oil ratio in the cracking and reforming reaction step by the cracking and reforming reaction device 33 is preferably in a range of 20 NL/L to 2000 NL/L. The lower limit is more preferably 30 NL/L or more and still more preferably 50 NL/L or more. In addition, the upper limit is more preferably 1800 NL/L or less and still more preferably 1500 NL/L or less. In a case in which the methane/oil ratio is less than 20 NL/L, the dilution effect is insufficient and it becomes impossible to sufficiently suppress the attachment of coke to the catalyst surface. On the other hand, in a case in which the methane/oil ratio exceeds 2000 NL/L, the size of the cracking and reforming reaction device 33 (fixed-bed reactor) is increased and thus the building cost thereof increases and a decrease in the production cost of an olefin or BTX is impaired.

In addition, in the present invention, instead of using the fixed bed as the cracking and reforming reaction device 33, it is also possible to use, for example, a fluidized bed which is capable of continuously removing the coke component attached to the catalyst and causing the reaction in a stable manner. In this case, a continuous reproduction-type fluidized bed in which the catalyst is circulated between the reactor and the reproduction device and the reaction and reproduction are continuously repeated is more preferably used. However, since the apparatus cost of the fluidized reactor increases compared with the fixed-bed reactor, the fixed-bed reactor is preferably used in order to suppress the cost increase of the entire apparatus for producing ethylene.

### (Refinement and collection of olefin and BTX fraction)

A cracking and reforming reaction product derived from the cracking and reforming reaction device 33 contains a gas containing an olefin having 2 to 4 carbon atoms, a BTX fraction, and an aromatic hydrocarbon of C9 or more. Therefore, the cracking and reforming reaction product is separated into the respective components, refined, and collected using a refinement and collection device 34 provided behind the cracking and reforming reaction device 33.

The refinement and collection device 34 includes a BTX fraction collection tower 35 and a gas separation tower 36.

In the BTX fraction tower 35, the cracking and reforming reaction product is distilled and separated into a light fraction having 8 or less carbon atoms and a heavy fraction having 9 or more carbon atoms. In the gas separation tower 36, the light fraction having 8 or less carbon atoms separated in the BTX fraction collection tower 35 is distilled and separated into a BTX fraction containing benzene, toluene, and coarse xylene and a gas fraction having a boiling point lower than that of the BTX fraction. In the BTX fraction collection tower 35 and the gas separation tower 36, the fractions obtained from the respective towers are retreated and thus it is not necessary to increase the distillation accuracy and it is possible to carry out the distillation operation in a relatively brief manner.

### (Product collection step)

As described above, in the gas separation tower 36, since the distillation operation is carried out in a relatively brief manner, the gas fraction separated in the gas separation tower 36 mainly contains hydrogen, C4 fractions such as ethylene, propylene, and butylene, and BTX. Therefore, the gas fraction, that is, a gas fraction that serves as a part of the product obtained in the cracking and reforming reaction step, is treated again in the product collection device 2 as illustrated in FIG. 1. That is, the gas fraction is provided to the thermally-cracked heavy oil separation step 3 together with the cracking product obtained in the cracking furnace 1. In addition, hydrogen or methane is separated and collected by treating the gas fraction mainly using the cracked gas compressor 4, the demethanizer tower 6, and the like and, furthermore, the gas fraction is treated using the deethanizer tower 9 and the ethylene-rectifying tower 10 so as to collect ethylene. In addition, the gas fraction is treated using the depropanizing tower 13 and the propylene-rectifying tower 14 so as to collect propylene and is treated using the depentanizer tower 17, the debutanization tower 18, and the like so as to collect a cracked gasoline (BTX fraction) such as butylene or butadiene.

Benzene, toluene, and xylene separated using the gas separation tower 36 illustrated in FIG. 2 are provided to the BTX refinement device 20 illustrated in FIG. 1, and benzene, toluene, and xylene are respectively refined and rectified so as to be separated and collected as products. In addition, in the present embodiment, BTX is collectively collected, but may be respectively and separately collected using the configuration of the apparatus and the like in the latter part. For example, xylene may be directly supplied to an apparatus for producing paraxylene or the like instead of the BTX refinement device.

### (Recycling step)

The heavy fraction (bottom fraction) having 9 or more carbon atoms separated in the BTX fraction collection tower 35 is returned to the hydrogenation reaction device 31 through a recycling path 37 (recycling step) which is recycle means and is again provided to the hydrogenation reaction step together with the light thermally-cracked heavy oil derived from the early distillation tower 30. That is, the heavy fraction (bottom fraction) is returned to the cracking and reforming reaction device 33 through the hydrogenation reaction device 31 and is provided to the cracking and reforming reaction step. In the recycling step (recycling path 37), for example, a heavy component having a 90 volume% distillate temperature (T90), as a distillation characteristic, of higher than 390°C is preferably cut back before being provided to the hydrogenation reaction device 31 (hydrogenation reaction step) and stored with the heavy thermally-cracked heavy oil. Even in a case in which a fraction having a 90 volume% distillate temperature (T90) of higher than 390°C is rarely contained, it is preferable to discharge a certain amount of the fraction outside the system when fractions having a low reactivity are accumulated or the like.

Thus far, the refinement, collection, and recycling to the cracking and reforming reaction step of the cracking and reforming reaction product derived from the cracking and reforming reaction device 33 have been described.

According to the method for producing an olefin having 2 to 4 carbon atoms and a monocyclic aromatic hydrocarbon having 6 to 8 carbon atoms using the apparatus for producing ethylene of the present embodiment, the feedstock oil made of the thermally-cracked heavy oil obtained from the apparatus for producing ethylene is cracked and reformed using the cracking and reforming reaction device 33 and a part of the obtained product is collected and treated in the product collection device 2 in the apparatus for producing ethylene and thus it is possible to easily collect a light olefin produced as a byproduct from the cracking and reforming reaction device 33 using the existing product collection device 2 without building a new device. Therefore, an increase in the cost is suppressed and a light olefin can be produced with higher production efficiency. In addition, it is also possible to efficiently produce a BTX fraction using the cracking and reforming reaction device 33.

In addition, since the hydrogenation reaction device 31 (hydrogenation reaction step) that partially hydrogenates a part of the feedstock oil (light thermally-cracked heavy oil) is provided upstream of the cracking and reforming reaction device 33 (cracking and reforming reaction step), it is possible to suppress the amount of hydrogen consumed in the hydrogenation reaction step and, simultaneously, suppress the amount of heat generated during the treatment and, furthermore, it is possible to more efficiently produce BTX in the cracking and reforming reaction device 33 (cracking and reforming reaction step).

In addition, since the recycling path (the recycling means 37 or the recycling step) along which the heavy fraction having 9 or more carbon atoms out of the product obtained from the cracking and reforming reaction device 33 (cracking and reforming reaction step) is returned again to the cracking and reforming reaction device 33 (cracking and reforming reaction step) through the hydrogenation reaction device 31 (hydrogenation reaction step) is provided, in the configuration of the apparatus that carries out the cracking and reforming process 21, it is possible to further increase the production efficiency of the BTX fraction and it is also possible to increase the production efficiency of a light olefin using the apparatus for producing ethylene.

In addition, in the cracking and reforming reaction step, since the feedstock oil is reacted in a state where methane coexists, the methane acts as a diluting agent and thus the attachment of coke to the catalyst surface can be suppressed. Therefore, the activity degradation of the catalyst is suppressed, the production efficiencies of an olefin and a BTX fraction are increased, and it is possible to reduce the cost necessary for the reproduction treatment of the catalyst.

In addition, since two or more fixed-bed reactors are used as the cracking and reforming reaction device 33 and the cracking and reforming reaction and the reproduction of the catalyst for producing an olefin and a monocyclic aromatic hydrocarbon are repeated by periodically switching the reactors, it is possible to produce the BTX fraction with high production efficiency. In addition, since the fixed-bed reactor of an apparatus cost that is extremely lower compared with that of the fluidized-bed reactor is used, it is possible to suppress the cost of the configuration of the apparatus used for the cracking and reforming process 21 at a sufficiently low level. Furthermore, since the light olefin generated together with the BTX fraction can also be easily collected using the existing product collection device 2 in the apparatus for producing ethylene, it is also possible to produce light olefin with high production efficiency together with a BTX fraction.

The present invention is not limited to the embodiment and a variety of modifications are permitted within the scope of the claims.

For example, as the hydrogen used in the hydrogenation reaction device 31 (hydrogenation reaction step), hydrogen obtained using a well-known method for producing hydrogen may be used instead of the hydrogen collected using the hydrogen collection unit 7.

In addition, in the embodiment, only the oil derived from the thermally-cracked heavy oil in the coupled apparatus for producing ethylene is used as the feedstock oil provided to the cracking and reforming process, but an oil derived from a thermally-cracked heavy oil from other apparatuses for producing ethylene may be collectively used as the feedstock oil as long as the characteristics of the feedstock oil described in the present application are met.

### Examples

Hereinafter, the present invention will be more specifically described based on examples and comparative examples but the present invention is not limited to these examples.

### [Method for producing hydrogenated oil of feedstock oil] (Preparation of catalyst for hydrogenation treatment)

Water glass No. 3 was added to 1 kg of an aqueous solution of sodium aluminate having a concentration of 5% by mass and the components were put into a container held at 70°C. A solution obtained by adding an aqueous solution of titanium sulfate (IV) (24% by mass in terms of the content of TiO₂) to 1 kg of an aqueous solution of aluminum sulfate having a concentration of 2.5% by mass was prepared in another container held at 70°C and this solution was added dropwise to an aqueous solution including the sodium aluminate for 15 minutes. The amounts of the water glass and the aqueous solution of titanium sulfate were adjusted so as to obtain predetermined contents of silica and titania.

A point in time when the pH of the mixed solution fell in a range of 6.9 to 7.5 was set as an end point, and the obtained slurry-form product was filtered through a filter, thereby obtaining a cake-form slurry. The cake-form slurry was moved to a container equipped with a reflux condenser, 300 ml of distilled water and 3 g of an aqueous solution of 27% ammonia were added, and were heated and stirred at 70°C for 24 hours. The stirred slurry was put into a kneading apparatus, was heated at 80°C or higher, and was kneaded while removing moisture, thereby obtaining a clay-form kneaded substance.

The obtained kneaded substance was extracted into a cylinder shape having a diameter of 1.5 mm using an extruder, was dried at 110°C for 1 hour, and then was fired at 550°C, thereby obtaining a shaped carrier. The obtained shaped carrier was taken as much as 300 g and was soaked with a soaking solution, which was prepared by adding molybdic anhydride, cobalt (II) nitrate hexahydrate, and phosphoric acid (having a concentration of 85%) to 150 ml of distilled water and adding malic acid until the components were dissolved, through spraying.

The amounts of the molybdic anhydride, the cobalt (II) nitrate hexahydrate, and the phosphoric acid used were adjusted so as to obtain a predetermined support amount. A specimen soaked with a soaking solution was dried at 110°C for 1 hour and then was fired at 550°C, thereby obtaining a catalyst A. In the catalyst A, the content of SiO₂ was 1.9% by mass and the content of TiO₂ was 2.0% by mass in terms of the carrier, and the amount of MoO₃ supported was 22.9% by mass, the amount of CoO supported was 2.5% by mass, and the amount of P₂O₅ supported was 4.0% by mass in terms of the catalyst.

### (Distillation and separation of thermally-cracked heavy oil)

The property values, distillation characteristics, aromatic content rate, and the like of the thermally-cracked heavy oil (referred to as the thermally-cracked heavy oil A) obtained from the apparatus for producing ethylene were measured. The results are described in Table 1. A thermally-cracked heavy oil B was prepared by dividing only the light component from the thermally-cracked heavy oil A through a distillation operation. In addition, a thermally-cracked heavy oil C was prepared by collecting an unreacted oil produced as a byproduct when a petroleum resin was produced from a heavy oil fraction lighter than the thermally-cracked heavy oil A. Furthermore, a thermally-cracked heavy oil D was prepared by separating and collecting only the light component from the mixed fraction of the thermally-cracked heavy oil A and the thermally-cracked heavy oil C through distillation. For the thermally-cracked heavy oils B, C, and D, the property values, distillation characteristics, aromatic content rate, and the like were measured. The results are described in Table 2.

**[Table 1]**

| Name | | Thermally-cracked heavy oil A |
|---|---|---|
| Density, g/ml (15°C) | | 1.0599 |
| Kinematic viscosity, mm²/s (40°C) | | 30 |
| Sulfur component, % by mass | | 0.061 |
| Distillation characteristics, °C | IBP | 193 |
| | T10 | 200 |
| | T90 | 504 |
| | EP | 608 |
| Saturated components, % by mass | | 1 or less |
| Aromatic components, % by mass | | 88 |
| Bicyclic or more aromatic components, % by mass | | 78 |

**[Table 2]**

| Name | | Thermally-cracked heavy oil B | Thermally-cracked heavy oil C | Thermally-cracked heavy oil D |
|---|---|---|---|---|
| Density, g/ml (15°C) | | 0.9903 | 0.8827 | 0.9188 |
| Kinematic viscosity, mm²/s (40°C) | | 1.6010 | 0.8153 | 1.077 |
| Sulfur component, % by mass | | 0.025 | 0.0013 | 0.001 |
| Distillation characteristics, °C | IBP | 194 | 163 | 161 |
| | T10 | 211 | 167 | 183 |
| | T90 | 256 | 176 | 248 |
| | EP | 291 | 203 | 303 |
| Saturated components, % by mass | | 0.8 | 7.2 | 5.1 |
| Aromatic components, % by mass | | 98.4 | 91.6 | 94 |
| Bicyclic or more aromatic components, % by mass | | 76.6 | 3.7 | 29.5 |

### (Hydrogenation reaction of thermally-cracked heavy oil)

The catalyst A was loaded into a fixed-bed continuous circulation-type reaction apparatus and, first, the preliminary sulfurization of the catalyst was carried out. That is, to a fraction (preliminary sulfurization feedstock oil) corresponding to a straight distillation-based light oil having a density at 15°C of 0.8516 g/ml, an initial boiling point of 231°C and a finishing boiling point of 376°C in a distillation test, a content of a sulfur component of 1.18% by mass in terms of a sulfur atom on the basis of the mass of the preliminary sulfurization feedstock oil, and a hue of L1.5, 1% by mass of DMDS in terms of the mass of the fraction was added, and the mixture was continuously supplied to the catalyst A for 48 hours.

After that, the thermally-cracked heavy oil B and the thermally-cracked heavy oil D described in Table 2 were used as the feedstock oils and a hydrogenation treatment was carried out at a reaction temperature of 300°C, LHSV=1.0 h⁻¹, a hydrogen oil ratio of 500 NL/L, and a pressure of 3 MPa. The obtained hydrogenated thermally-cracked heavy oils were labelled as B-1 and D-1 and the characteristics thereof are described in Table 3.

**[Table 3]**

| Name | | Hydrogenated thermally-cracked heavy oil B-1 | Hydrogenated thermally-cracked heavy oil D-1 |
|---|---|---|---|
| Density, g/ml (15°C) | | 0.9498 | 0.901 |
| Kinematic viscosity, mm²/s (40°C) | | 1.616 | 1.010 |
| Sulfur component, % by mass | | 0.0003 | 0.0002 |
| Distillation characteristics, °C | IBP | 192.0 | 159.0 |
| | T10 | 201.0 | 179.0 |
| | T90 | 252.0 | 245.0 |
| | EP | 314.0 | 296.0 |
| Saturated components, % by mass | | 7.9 | 8.8 |
| Aromatic components, % by mass | | 91.8 | 90.9 |
| Bicyclic or more aromatic components, % by mass | | 4.6 | 3.9 |

The distillation characteristics in Tables 1, 2, and 3 were respectively measured according to "Testing Method For Distillation Of Petroleum Products" described in JIS K 2254. In addition, the density at 15°C in Table 1 was measured according to "Testing Method For Distillation Of Petroleum Products" described in JIS K 2254, the kinematic viscosity at 40°C was measured according to "Crude Petroleum And Petroleum Products-Determination Of Kinematic Viscosity And Calculation Method For Viscosity Index Of Crude Oil And Petroleum Products" described in JIS K 2283, and the content of sulfur was measured according to "Crude Petroleum And Petroleum Products-Determination Of Sulfur Content" described in JIS K 2541, respectively.

In addition, the respective compositions in Tables 1, 2, and 3 were computed by carrying out a mass analysis (apparatus: manufactured by JEOL Ltd., JMS-700) through an EI ionization method on saturated components and aromatic components obtained through silica gel chromate fractionation and carrying out the type analysis of hydrocarbons according to ASTM D2425 "Standard Test Method for Hydrocarbon Types in Middle Distillates by Mass Spectrometry".

### [Method for producing olefin and aromatic hydrocarbon] [Preparation example 1 of catalyst for producing olefin and monocyclic aromatic hydrocarbon] "Preparation of catalyst including phosphorous-containing proton-type MFI zeolite"

A solution (A) made up of 1706.1 g of sodium silicate (J silicate soda No. 3, SiO₂: 28% by mass to 30% by mass, Na: 9% by mass to 10% by mass, the balance of water, manufactured by Nippon Chemical Industrial Co., Ltd.) and 2227.5 g of water and a solution (B) made up of 64.2 g of Al₂(SO₄)₃·14 to 18H₂O (special grade chemical, manufactured by Wako Pure Chemical Industries, Ltd.), 369.2 g of tetrapropylammonium bromide, 152.1 g of H₂SO₄ (97% by mass), 326.6 g of NaCl, and 2975.7 g of water were prepared respectively.

Next, while the solution (A) was stirred at room temperature, the solution (B) was slowly added to the solution (A).

The obtained mixture was vigorously stirred for 15 minutes using a mixer, a gel was crushed and thus was put into a homogeneous fine milky state.

Next, the mixture was put into a stainless steel autoclave and a crystallization operation was carried out under the self-pressure under conditions in which the temperature was set to 165°C, the time was set to 72 hours, and the stirring rate was set to 100 rpm. After the end of the crystallization operation, the product was filtered so as to collect the solid product and washing and filtration were repeated 5 times using approximately 5 liters of deionized water. A solid substance obtained through filtration was dried at 120°C and, furthermore, was fired at 550°C for 3 hours under air circulation.

As a result of an X-ray diffraction analysis (instrument name: Rigaku RINT-2500V), the obtained fired substance was confirmed to have an MFI structure. In addition, the SiO₂/Al₂O₃ ratio (molar ratio) obtained through a fluorescent X-ray analysis (instrument name: Rigaku ZSX101e) was 65. In addition, the content of an aluminum element contained in the lattice skeleton computed from the result was 1.3% by mass.

Next, an aqueous solution of 30% by mass of ammonium nitrate was added at a proportion of 5 mL per gram of the obtained fired substance, the mixture was heated and stirred at 100°C for 2 hours, then, was filtered and washed with water. This operation was repeated 4 times and then the mixture was dried at 120°C for 3 hours, thereby obtaining an ammonium-type MFI zeolite. After that, firing was carried out at 780°C for 3 hours, thereby obtaining a proton-type MFI zeolite.

Next, 30 g of an aqueous solution of diammonium hydrogen phosphate was soaked into 30 g of the obtained proton-type MFI zeolite so that 2.0% by mass of phosphorous (a value when the total mass of the proton-type MFI zeolite was set to 100% by mass) was supported and was dried at 120°c. After that, the zeolite was fired at 780°C for 3 hours under air circulation, thereby obtaining a phosphorous-containing proton-type MFI zeolite. In order to exclude the influence on the initial activity of the obtained catalyst, a hydrothermal treatment was carried out in an environment of a treatment temperature of 650°C, a treatment time of 6 hours, and 100% by mass of water vapor. After that, a pressure of 39.2 MPa (400 kgf) was applied to the obtained hydrothermal deterioration treatment catalyst so as to carry out tablet compression and the catalyst was coarsely crushed so as to have sizes in a range of 20 mesh to 28 mesh, thereby obtaining a granular body of a catalyst B.

### "Preparation of phosphorous-containing proton-type BEA zeolite"

A first solution was prepared by dissolving 59.1 g of silicic acid (SiO₂: 89% by mass) in 202 g of an aqueous solution of tetraethylammnoium hydroxide (40% by mass). The first solution was added to a second solution prepared by dissolving 0.74 g of an Al pellet and 2.69 g of sodium hydroxide in 17.7 g of water. The first solution and the second solution were mixed together as described above, thereby obtaining a reaction mixture having a composition (in terms of the molar ratio of an oxide) of 2.4Na₂O-20.0(TEA)₂-Al₂O₃-64.0SiO₂-612H₂O.

This reaction mixture was put into a 0.3 L autoclave and was heated at 150°C for 6 days. In addition, the obtained product was separated from the parent liquid and was washed with distilled water.

As a result of an X-ray diffraction analysis (instrument name: Rigaku RINT-2500V), the obtained product was confirmed to be a BEA-type zeolite from the XRD pattern.

After that, ions were exchanged using an aqueous solution of ammonium nitrate (30% by mass), the BEA-type zeolite was fired at 550°C for 3 hours, thereby obtaining a proton-type BEA zeolite.

### "Preparation of catalyst including phosphorous-containing proton-type BEA zeolite"

Next, 30 g of an aqueous solution of diammonium hydrogen phosphate was soaked into 30 g of the obtained proton-type BEA zeolite so that 2.0% by mass of phosphorous (a value when the total mass of the proton-type BEA zeolite was set to 100% by mass) was supported and was dried at 120°c. After that, the zeolite was fired at 780°C for 3 hours under air circulation, thereby obtaining a catalyst containing the proton-type BEA zeolite and phosphorous. In order to exclude the influence on the initial activity of the obtained catalyst, a hydrothermal treatment was carried out in an environment of a treatment temperature of 650°C, a treatment time of 6 hours, and 100% by mass of water vapor. After that, a pressure of 39.2 MPa (400 kgf) was applied to the hydrothermal deterioration treatment catalyst obtained by mixing 9 parts of the hydrothermally-treated phosphorous-containing proton-type MFI zeolite with 1 part of the phosphorous-supported proton-type BEA zeolite that had been, similarly, hydrothermally treated so as to carry out tablet compression and the catalyst was coarsely crushed so as to have sizes in a range of 20 mesh to 28 mesh, thereby obtaining a granular body of a catalyst C.

### [Examples 1 to 8 and Comparative Examples 1 and 2] (Production of olefin and aromatic hydrocarbon)

Individual feedstock oils described in Table 4 were brought into contact with and were reacted with the corresponding catalyst using a circulation-type reaction apparatus having a reactor loaded with the catalyst B or C (10 ml) under a condition in which molecular hydrogen having a reaction temperature of 550°C, a reaction pressure of 0.1 MPaG, and LHSV=1 did not coexist. The feedstock oils used and the catalyst were combined together so as to produce Examples 1 to 8 and Comparative Examples 1 and 2 as described in Table 4. When each of the feedstock oils and the catalyst were brought into contact with and were reacted with each other, nitrogen was introduced into the feedstock oil as a diluting agent so as to obtain a volume ratio of 1:1. In Example 8, the same experiment was carried out with a diluting agent changed to methane.

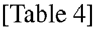

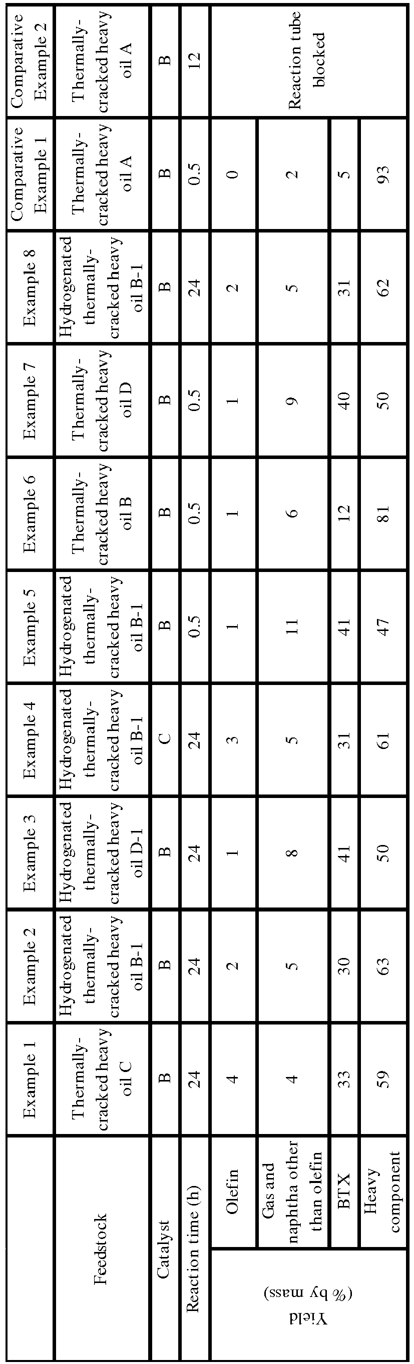

Reactions were caused under the above-described conditions for the times described in Table 4 so as to produce olefins having 2 to 4 carbon atoms and monocyclic aromatic hydrocarbons having 6 to 8 carbon atoms (benzene, toluene, and xylene) and the compositional analyses of the products were carried out through an FID gas chromatograph directly coupled to the reaction apparatus so as to evaluate the catalyst activities. The evaluation results are described in Table 4. Here, the olefin refers to an olefin having 2 to 4 carbon atoms, BTX refers to an aromatic compound having 6 to 8 carbon atoms, the heavy component refers to a product heavier than BTX, and the gas and naphtha other than the olefin refer to products other than the olefin, BTX, and the heavy component.

From the results described in Table 4, it was found that, in Examples 1 to 8 in which the thermally-cracked heavy oil having predetermined characteristics was used as the feedstock oil, in contrast to Comparative Example 1 in which the thermally-cracked heavy oil having a boiling point of higher than 400°C was used as the feedstock oil, olefins having 2 to 4 carbon atoms and monocyclic aromatic hydrocarbons having 6 to 8 carbon atoms (benzene, toluene, and xylene) could be produced with a favorable yield. In addition, in Comparative Example 2 in which coke was excessively generated on the catalyst, the reaction tube was blocked in the middle, and thus the evaluation could not be continued for longer than 24 hours.

Therefore, in Examples 1 to 8 of the present invention, it was confirmed that olefins and BTX could be efficiently produced from the thermally-cracked heavy oil obtained from the apparatus for producing ethylene.

In addition, when Examples 5 and 6 were compared together, it was confirmed that olefins having 2 to 4 carbon atoms and monocyclic aromatic hydrocarbons having 6 to 8 carbon atoms (benzene, toluene, and xylene) could be more efficiently produced by partially hydrogenating the feedstock.

In addition, compared with Example 5, in Example 2, the BTX yield was decreased and thus it was confirmed that it was more efficient to repeatedly use two or more reactors while repeating the reaction and the reproduction.

In addition, in Example 8, the results were almost the same as in Example 2, it was confirmed that olefins and aromatic hydrocarbons could be stably produced by using methane as the diluting agent with no increase in the coke on the catalyst (the yields in Table 4 do not include methane gas that was used as the diluting agent).

### (Example 9)

The liquid product obtained in Example 4 was distilled and only the components heavier than BTX were collected. The collected liquid and the thermally-cracked heavy oil B were mixed together at a ratio of 2:1, again, were hydrogenated under the same conditions as the conditions in which the hydrogenated thermally-cracked heavy oil B-1 was obtained, and then the catalyst activities were evaluated under the same conditions as in Example 4. The results are described in Table 5. From the results described in Table 5, it was confirmed that it was possible to more efficiently produce olefins and BTX from the thermally-cracked heavy oil obtained from the apparatus for producing ethylene by repeatedly using the heavy oil as the feedstock.

**[Table 5]**

| | | Example 9 |
|---|---|---|
| Feedstock | | Hydrogenated substance of mixed oil of bottom corresponding to Example 4 and thermally-cracked heavy oil |
| Catalyst | | C |
| Reaction time (h) | | 24 |
| Yield (% by mass) | Olefin | 3 |
| | Gas and naphtha other than olefin | 5 |
| | BTX | 30 |
| | Heavy component | 61 |

### Industrial Applicability

The present invention relates to a method for producing an olefin having 2 to 4 carbon atoms and a monocyclic aromatic hydrocarbon having 6 to 8 carbon atoms. According to the present invention, it is possible to produce BTX with higher production efficiency while suppressing an increase in the cost and, furthermore, to efficiently produce light olefins as well.

### Reference Signs List

1 CRACKING FURNACE
2 PRODUCT COLLECTION DEVICE
31 HYDROGENATION REACTION DEVICE
33 CRACKING AND REFORMING REACTION DEVICE (FIXED-BED REACTOR)
37 RECYCLING PATH (RECYCLING MEANS)

## Claims

1. A method for producing an olefin and a monocyclic aromatic hydrocarbon, comprising:
a thermal cracking step of thermally cracking, in a cracking furnace (1), a feedstock to produce a cracked product containing hydrogen, ethylene, propylene, a C4 fraction, and a fraction containing a monocyclic aromatic hydrocarbon having 6 to 8 carbon atoms and to produce a thermally-cracked heavy oil as a residual oil heavier than the fraction containing a monocyclic aromatic hydrocarbon having 6 to 8 carbon atoms;
using a product collection device (2) including a thermally cracked heavy oil separation step (3), a cracked gas compressor (4), a cryogenic separation step (5), a demethanizer tower (6), a deethanizer tower (9), an ethylene-rectifying tower (10), a depropanizing tower (13), a propylene-rectifying tower (14), a depentanzier tower (17), a debutanization tower (18), a cracked gasoline collection unit (19), a BTX refinement device (20) and further including individual collection units that separate and collect hydrogen (7), methane (8), ethane (11), ethylene (12), propane (15) and propylene (16);
wherein the thermally-cracked heavy oil separation step (3) comprises separating a lower boiling point component including the hydrogen, the ethylene, the propylene, the C4 fraction, and the fraction containing the monocyclic aromatic hydrocarbon having 6 to 8 carbon atoms and a higher boiling point component being the thermally-cracked heavy oil from the cracked product produced in the cracking furnace; and the lower boiling point component separated in the thermally-cracked heavy oil separation step is extracted in a gas form and is pressurized using the cracked gas compressor (4);
wherein the cryogenic separation step (5) comprises separating the lower boiling point component that has been pressurized into hydrogen and a component having a higher boiling point than hydrogen, and collecting hydrogen using the hydrogen collection unit (7);
a methane separation and collection step of supplying the component having the higher boiling point than hydrogen to the demethanizer tower (6) and separating into methane and a higher boiling point component than methane, and collecting methane using the methane collection unit (8);
an ethylene and ethane separation and collection step of supplying the higher boiling point component than methane to the deethanizer tower (9) and separating into ethylene, ethane, and a component having a higher boiling point than ethylene and ethane, separating the ethylene and ethane using the ethylene-rectifying tower (10) and collecting ethane using the ethane collection unit (11) and ethylene using the ethylene collection unit (12);
a propylene and propane separation and collection step of supplying the component having a higher boiling point than ethylene and ethane to the depropanizing tower (13) and separating into propylene, propane, and a component having a higher boiling point than propylene and propane, separating the propylene and propane using the propylene-rectifying tower (14) and collecting propylene using the propylene collection unit (16) and propane using the propane collection unit (15);
a pentane separation step of supplying the component having a higher boiling point than propylene and propane to the depentanizier tower (17) and separating into a component having 5 or less carbon atoms and a component having 6 or more carbon atoms;
a C4 fraction and C5 fraction separation and collection step of supplying the component having 5 or less carbon atoms to the debutanization tower (18) and separating into a C4 fraction and a C5 fraction and collecting the C4 fraction and the C5 fraction;
a collection step for collecting the component having 6 or more carbon atoms using the cracked gasoline collection unit (19);
a cracking and reforming reaction step of obtaining a product containing an olefin having 2 to 4 carbon atoms and a monocyclic aromatic hydrocarbon having 6 to 8 carbon atoms by bringing a feedstock oil which is the thermally-cracked heavy oil and which has a 90 volume% distillate temperature, as a distillation characteristic, of 390°C or lower into contact, at a temperature in a range of 350°C to 700°C, a pressure in a range of 0.1 MPaG to 2.0 MPaG, and a gas passing time over the catalyst in a range of 2 seconds to 150 seconds, with a catalyst for producing an olefin and a monocyclic aromatic hydrocarbon containing crystalline aluminosilicate and phosphorus, and reacting the feedstock oil; and
a product collection step (34) of collecting the olefin having 2 to 4 carbon atoms and the monocyclic aromatic hydrocarbon having 6 to 8 carbon atoms respectively by distilling the product obtained in the cracking and reforming reaction step to be separated into a light fraction having 8 or less carbon atoms and a heavy fraction having 9 or more carbon atoms, separating the light fraction into a BTX fraction containing benzene, toluene, and coarse xylene and a gas fraction having a boiling point lower than that of the BTX fraction, supplying the gas fraction to the product collection device (2) for the thermally-cracked heavy oil separation step (3) together with the cracked product, and
treating in the BTX refinement device (20) the BTX fraction together with the component having 6 or more carbon atoms collected in the collection step,
wherein the thermally-cracked heavy oil is distilled and separated into the feedstock oil which has a 90 volume% distillate temperature of 390°C or lower and a heavy fraction which has a 90 volume% distillate temperature of more than 390°C before the cracking and reforming reaction step in the case where the thermally-cracked heavy oil does not have a 90 volume% distillate temperature of 390°C or lower; and
the thermally-cracked heavy oil is used as the feedstock oil in the cracking and reforming reaction step in the case where the thermally-cracked heavy oil has a 90 volume% distillate temperature of 390°C or lower; and
further comprising before the cracking and reforming reaction step, a hydrogenation reaction step (31) of partially hydrogenating part or all of the feedstock oil wherein, in the hydrogenation reaction step, as hydrogenation conditions for hydrogenating the feedstock oil, a hydrogen partial pressure is set in a range of 1 MPa to 9 MPa, a hydrogenation temperature is set in a range of 150°C to 400°C, and, as a hydrogenation catalyst, a catalyst obtained by supporting at least one metal selected from Group 6 metals in the periodic table in a range of 10% by mass to 30% by mass and at least one metal selected from Groups 8 to 10 metals in the periodic table in a range of 1% by mass to 7% by mass on an inorganic carrier containing aluminum oxide, based on the total mass of the catalyst is used; and hydrogen removal in a dehydrogenation tower (32); and
further comprising a recycling step (37) of returning a heavy fraction having 9 or more carbon atoms from the product obtained in the cracking and reforming reaction step to the cracking and reforming reaction step via the hydrogenation reaction step (31).

2. The method for producing an olefin and a monocyclic aromatic hydrocarbon according to Claim 1,
wherein, in the cracking and reforming reaction step, the feedstock oil is reacted in a state where a saturated hydrocarbon having 1 to 3 carbon atoms is co-present with the feedstock oil.

3. The method for producing an olefin and a monocyclic aromatic hydrocarbon according to Claim 1 or 2,
wherein, in the cracking and reforming reaction step, two or more fixed-bed reactors are used and a cracking and reforming reaction and reproduction of the catalyst for producing an olefin and a monocyclic aromatic hydrocarbon are repeated while the reactors are periodically switched.

4. The method for producing an olefin and a monocyclic aromatic hydrocarbon according to any one of Claims 1 to 3,
wherein the crystalline aluminosilicate contained in the catalyst for producing an olefin and a monocyclic aromatic hydrocarbon used in the cracking and reforming reaction step includes a medium-pore zeolite and/or a large-pore zeolite as a main component.

## Patentansprüche

1. Verfahren zur Herstellung eines Olefins und eines monocyclischen aromatischen Kohlenwasserstoffes, umfassend:
einen Schritt der thermischen Spaltung, in dem in einem Spaltofen (1) ein Ausgangsmaterial thermisch gespalten wird, um ein gespaltenes Produkt herzustellen, das Wasserstoff, Ethylen, Propylen, eine C4-Fraktion und eine Fraktion enthält, die einen monocyclischen aromatischen Kohlenwasserstoff enthält, der 6 bis 8 Kohlenstoffatome aufweist, und um ein thermisch gespaltenes schweres Öl als ein Rückstandsöl herzustellen, das schwerer als die Fraktion ist, die einen monocyclischen aromatischen Kohlenwasserstoff enthält, der 6 bis 8 Kohlenstoffatome aufweist;
Verwenden einer Produktsammelvorrichtung (2), die einen Trennungsschritt (3) von thermisch gespaltenem schweren Öl, einen Spaltgasverdichter (4), einen kryogenen Trennungsschritt (5), einen Demethanisierungsturm (6), einen Deethanisierungsturm (9), einen Ethylenrektifikationsturm (10), einen Depropanisierungsturm (13), einen Propylenrektifikationsturm (14), einen Depentanisierungsturm (17), einen Debutanisierungsturm (18), eine Sammeleinheit für gespaltenes Benzin (19), eine BTX-Verfeinerungsvorrichtung (20) beinhaltet und ferner einzelne Sammeleinheiten beinhaltet, die Wasserstoff (7), Methan (8), Ethan (11), Ethylen (12), Propan (15) und Propylen (16) trennen und sammeln;
wobei der Trennungsschritt (3) von thermisch gespaltenem schweren Öl das Trennen einer Komponente mit niedrigerem Siedepunkt, beinhaltend den Wasserstoff, das Ethylen, das Propylen, die C4-Fraktion und die Fraktion, die den monocyclischen aromatischen Kohlenwasserstoff enthält, der 6 bis 8 Kohlenstoffatome aufweist, und einer Komponente mit höherem Siedepunkt, bei der es sich um das thermisch gespaltene schwere Öl handelt, von dem gespaltenen Produkt umfasst, das in dem Spaltofen hergestellt wird; und wobei die Komponente mit niedrigerem Siedepunkt, die in dem Trennungsschritt von thermisch gespaltenem schweren Öl getrennt wird, in einer Gasform extrahiert wird und unter Verwendung des Spaltgasverdichters (4) unter Druck gesetzt wird;
wobei der kryogene Trennungsschritt (5) das Trennen der Komponente mit niedrigerem Siedepunkt, die zu Wasserstoff unter Druck gesetzt worden ist, und einer Komponente, die einen höheren Siedepunkt als Wasserstoff aufweist, und das Sammeln von Wasserstoff unter Verwendung der Wasserstoffsammeleinheit (7) umfasst;
einen Methantrennungs- und -sammelschritt des Zuführens der Komponente, die den höheren Siedepunkt als Wasserstoff aufweist, zu dem Demethanisierungsturm (6) und Trennens zu Methan und einer Komponente mit einem höheren Siedepunkt als Methan, und des Sammelns von Methan unter Verwendung der Methansammeleinheit (8);
einen Ethylen- und Ethantrennungs- und -sammelschritt des Zuführens der Komponente, die den höheren Siedepunkt als Methan aufweist, zu dem Deethanisierungsturm (9) und Trennens zu Ethylen, Ethan und einer Komponente, die einen höheren Siedepunkt als Ethylen und Ethan aufweist, Trennens des Ethylens und Ethans unter Verwendung des Ethylenrektifikationsturms (10) und Sammelns von Ethan unter Verwendung der Ethansammeleinheit (11) und Ethylen unter Verwendung der Ethylensammeleinheit (12);
einen Propylen- und Propantrennungs- und -sammelschritt des Zuführens der Komponente, die einen höheren Siedepunkt als Ethylen und Ethan aufweist, zu dem Depropanisierungsturm (13) und Trennens zu Propylen, Propan und einer Komponente, die einen höheren Siedepunkt als Propylen und Propan aufweist, Trennens des Propylens und Propans unter Verwendung des Propylenrektifikationsturms (14) und Sammelns von Propylen unter Verwendung der Propylensammeleinheit (16) und Propan unter Verwendung der Propansammeleinheit (15);
einen Pentantrennungsschritt des Zuführens der Komponente, die einen höheren Siedepunkt als Propylen und Propan aufweist, zu dem Depentanisierungsturm (17) und Trennens zu einer Komponente, die 5 oder weniger Kohlenstoffatome aufweist, und einer Komponente, die 6 oder mehr Kohlenstoffatome aufweist;
einen C4-Fraktions- und C5-Fraktionstrennungs- und -sammelschritt des Zuführens der Komponente, die 5 oder weniger Kohlenstoffatome aufweist, zu dem Debutanisierungsturm (18) und Trennens zu einer C4-Fraktion und einer C5-Fraktion und Sammelns der C4-Fraktion und der C5-Fraktion;
einen Sammelschritt zum Sammeln der Komponente, die 6 oder mehr Kohlenstoffatome aufweist, unter Verwendung der Sammeleinheit für gespaltenes Benzin (19);
einen Spalt- und Reformierreaktionsschritt des Erhaltens eines Produktes, das ein Olefin, das 2 bis 4 Kohlenstoffatome aufweist, und einen monocyclischen aromatischen Kohlenwasserstoff, der 6 bis 8 Kohlenstoffatome aufweist, enthält, indem ein Ausgangsmaterialöl, bei dem es sich um das thermisch gespaltene schwere Öl handelt und das eine Temperatur eines Destillats von 90 Volumen-% als Destillationseigenschaft von 390 °C oder niedriger aufweist, bei einer Temperatur in einem Bereich von 350 °C bis 700 °C, einem Druck in einem Bereich von 0,1 MPaG bis 2,0 MPaG und einer Gasverlaufszeit über den Katalysator in einem Bereich von 2 Sekunden bis 150 Sekunden, mit einem Katalysator zur Herstellung eines Olefins und eines monocyclischen aromatischen Kohlenwasserstoffs, der kristallines Aluminiumsilikat und Phosphor enthält, kontaktiert wird, und das Ausgangsmaterialöl reagiert wird; und
einen Produktsammelschritt (34) des Sammelns von jeweils dem Olefin, das 2 bis 4 Kohlenstoffatome aufweist, und dem monocyclischen aromatischen Kohlenwasserstoff, der 6 bis 8 Kohlenstoffatome aufweist, indem das Produkt destilliert wird, das in dem Spalt- und Reformierreaktionsschritt erhalten wird, um in eine leichte Fraktion, die 8 oder weniger Kohlenstoffatome aufweist, und eine schwere Fraktion, die 9 oder mehr Kohlenstoffatome aufweist, geteilt zu werden, die leichte Fraktion in eine BTX-Fraktion, die Benzol, Toluol und grobes Xylol enthält, und eine Gasfraktion, die einen Siedepunkt aufweist, der niedriger als derjenige der BTX-Fraktion ist, getrennt wird, die Gasfraktion der Produktsammelvorrichtung (2) für den Trennungsschritt (3) von thermisch gespaltenem schweren Öl zusammen mit dem gespaltenen Produkt zugeführt wird, und
die BTX-Fraktion in der BTX-Verfeinerungsvorrichtung (20) zusammen mit der Komponente, die 6 oder mehr Kohlenstoffatome aufweist, die in dem Sammelschritt gesammelt wurde, behandelt wird,
wobei das thermisch gespaltene schwere Öl destilliert und vor dem Spalt- und Reformierreaktionsschritt in dem Fall, in dem das thermisch gespaltene schwere Öl keine Temperatur eines Destillats von 90 Volumen-% von 390 °C oder niedriger aufweist, in das Ausgangsmaterialöl, das eine Temperatur eines Destillats von 90 Volumen-% von 390 °C oder niedriger aufweist, und eine schwere Fraktion, die eine Temperatur eines Destillats von 90 Volumen-% von mehr als 390 °C aufweist, getrennt wird; und
das thermisch gespaltene schwere Öl in dem Fall, in dem das thermisch gespaltene schwere Öl eine Temperatur eines Destillats von 90 Volumen-% von 390 °C oder niedriger aufweist, als das Ausgangsmaterialöl in dem Spalt- und Reformierreaktionsschritt verwendet wird; und
ferner umfassend, vor dem Spalt- und Reformierreaktionsschritt, einen Hydrierreaktionsschritt (31) des partiellen Hydrierens eines Teils oder des gesamten Ausgangsmaterialöls, wobei in dem Hydrierreaktionsschritt als Hydrierbedingungen zum Hydrieren des Ausgangsmaterialöls ein partieller Wasserstoffdruck in einem Bereich von 1 MPa bis 9 MPa festgelegt ist, eine Hydriertemperatur in einem Bereich von 150 °C bis 400 °C festgelegt ist und als ein Hydrierkatalysator ein Katalysator, der erhalten wird, indem zumindest ein Metall, das aus Gruppe 6 Metalle in dem Periodensystem ausgewählt ist, in einem Bereich von 10 Masse-% bis 30 Masse-% und zumindest ein Metall, das aus Gruppe 8 bis 10 Metalle in dem Periodensystem ausgewählt ist, in einem Bereich von 1 Masse-% bis 7 Masse-% an einem anorganischen Träger gestützt wird, der Aluminiumoxid enthält, auf Grundlage der Gesamtmasse des Katalysators verwendet wird, und Wasserstoffentfernung in einem Dehydrierturm (32); und
ferner umfassend einen Recycling-Schritt (37) des Rückführens einer schweren Fraktion, die 9 oder mehr Kohlenstoffatome aufweist, von dem Produkt, das in dem Spalt- und Reformierreaktionsschritt erhalten wird, zu dem Spalt- und Reformierschritt über den Hydrierungsreaktionsschritt (31).

2. Verfahren zur Herstellung eines Olefins und eines monocyclischen aromatischen Kohlenwasserstoffes nach Anspruch 1,
wobei in dem Spalt- und Reformierreaktionsschritt das Ausgangsmaterialöl in einem Zustand reagiert wird, in dem ein gesättigter Kohlenwasserstoff, der 1 bis 3 Kohlenstoffatome aufweist, zusammen mit dem Ausgangsmaterialöl vorhanden ist.

3. Verfahren zur Herstellung eines Olefins und eines monocyclischen aromatischen Kohlenwasserstoffes nach Anspruch 1 oder 2,
wobei in dem Spalt- und Reformierreaktionsschritt zwei oder mehr Festbettreaktoren verwendet werden und eine Spalt- und Reformierreaktion und Reproduktion des Katalysators zum Herstellen eines Olefins und eines monocyclischen aromatischen Kohlenwasserstoffes wiederholt werden, während die Reaktoren periodisch gewechselt werden.

4. Verfahren zur Herstellung eines Olefins und eines monocyclischen aromatischen Kohlenwasserstoffes nach einem der Ansprüche 1 bis 3,
wobei das kristalline Aluminiumsilikat, das in dem Katalysator zum Herstellen eines Olefins und einen monocyclischen aromatischen Kohlenwasserstoffes, die in dem Spalt- und Reformierreaktionsschritt verwendet werden, enthalten ist, einen Zeoliten mit mittlerer Porengröße und/oder einen Zeoliten mit großer Porengröße als Hauptkomponente beinhaltet.

## Revendications

1. Procédé de production d'une oléfine et d'un hydrocarbure aromatique monocyclique, comprenant :
une étape de craquage thermique pour craquer thermiquement, dans un four de craquage (1), une charge pour produire un produit craqué contenant de l'hydrogène, de l'éthylène, du propylène, une fraction C4 et une fraction contenant un hydrocarbure aromatique monocyclique comportant 6 à 8 atomes de carbone et pour produire une huile lourde thermiquement craquée sous forme d'huile résiduelle plus lourde que la fraction contenant un hydrocarbure aromatique monocyclique comportant 6 à 8 atomes de carbone ;
l'utilisation d'un dispositif de récupération de produit (2) comprenant une étape de séparation d'huile lourde thermiquement craquée (3), un compresseur de gaz craqué (4), une étape de séparation cryogénique (5), une tour de déméthanisation (6), une tour de dééthanisation (9), une tour de rectification d'éthylène (10), une tour de dépropanisation (13), un tour de rectification de propylène (14), une tour de dépentanisation (17), une tour de débutanisation (18), une unité de récupération d'essence craquée (19), un dispositif de raffinage de BTX (20) et comprenant en outre des unités de récupération individuelles qui séparent et récupèrent l'hydrogène (7), le méthane (8), l'éthane (11), l'éthylène (12), le propane (15) et le propylène (16) ;
ladite étape de séparation d'huile lourde thermiquement craquée (3) comprenant la séparation d'un composant à point d'ébullition plus faible comprenant l'hydrogène, l'éthylène, le propylène, la fraction C4 et la fraction contenant l'hydrocarbure aromatique monocyclique comportant 6 à 8 atomes de carbone et un composant à point d'ébullition plus élevé qui est l'huile lourde thermiquement craquée provenant du produit craqué produit dans le four de craquage ; et ledit composant à point d'ébullition plus faible séparé dans l'étape de séparation d'huile lourde thermiquement craquée étant extrait sous forme de gaz et étant mis sous pression au moyen du compresseur de gaz craqué (4) ;
ladite étape de séparation cryogénique (5) comprenant la séparation du composant à point d'ébullition plus faible qui a été mis sous pression dans de l'hydrogène et un composant présentant un point d'ébullition plus élevé que l'hydrogène, et la récupération de l'hydrogène au moyen de l'unité de récupération d'hydrogène (7) ;
une étape de séparation et de récupération du méthane consistant à alimenter le composant présentant le point d'ébullition plus élevé que l'hydrogène dans la tour de déméthanisation (6) et séparer en méthane et en un composant à point d'ébullition plus élevé que le méthane et récupérer le méthane au moyen de l'unité de récupération de méthane (8) ;
une étape de séparation et de récupération de l'éthylène et de l'éthane consistant à alimenter le composant à point d'ébullition plus élevé que le méthane dans la tour de dééthanisation (9) et séparer en éthylène, en éthane et en un composant présentant un point d'ébullition plus élevé que l'éthylène et l'éthane, séparer l'éthylène et l'éthane au moyen de la tour de rectification d'éthylène (10) et récupérer l'éthane au moyen de l'unité de récupération d'éthane (11) et l'éthylène au moyen de l'unité de récupération d'éthylène (12) ;
une étape de séparation et de récupération du propylène et du propane consistant à alimenter le composant présentant un point d'ébullition plus élevé que l'éthylène et l'éthane dans la tour de dépropanisation (13) et séparer en propylène, en propane et en un composant présentant un point d'ébullition plus élevé que le propylène et le propane, séparer le propylène et le propane au moyen de la tour de rectification de propylène (14) et récupérer le propylène au moyen de l'unité de récupération de propylène (16) et le propane au moyen de l'unité de récupération de propane (15) ;
une étape de séparation du pentane consistant à alimenter le composant présentant un point d'ébullition plus élevé que le propylène et le propane dans la tour de dépentanisation (17) et séparer en un composant présentant 5 atomes de carbone ou moins et en un composant présentant 6 atomes de carbone ou plus ;
une étape de séparation et de récupération de la fraction C4 et de la fraction C5 consistant à alimenter le composant présentant 5 atomes de carbone ou moins dans la tour de débutanisation (18) et séparer en une fraction C4 et en une fraction C5 et récupérer le fraction C4 et la fraction C5 ;
une étape de récupération pour récupérer le composant présentant 6 atomes de carbone ou plus au moyen de l'unité de récupération d'essence craquée (19) ;
une étape de réaction de craquage et de reformage consistant à obtenir un produit contenant une oléfine comportant 2 à 4 atomes de carbone et un hydrocarbure aromatique monocyclique comportant 6 à 8 atomes de carbone en mettant une huile de charge qui est l'huile lourde thermiquement craquée et qui présente comme caractéristique de distillation une température de distillation de 90 % en volume de 390°C ou moins en contact, à une température comprise dans la plage de 350°C à 700°C, une pression dans la plage de 0,1 MPaG à 2,0 MPaG et un temps de passage du gaz sur le catalyseur compris dans la plage de 2 secondes à 150 secondes, avec un catalyseur pour produire une oléfine et un hydrocarbure aromatique monocyclique contenant un aluminosilicate cristallin et du phosphore, et faire réagir l'huile de charge ; et
une étape de récupération de produit (34) consistant à récupérer l'oléfine comportant 2 à 4 atomes de carbone et l'hydrocarbure aromatique monocyclique comportant 6 à 8 atomes de carbone respectivement en distillant le produit obtenu dans l'étape de réaction de craquage et de formage pour être séparé en une fraction légère comportant 8 atomes de carbone ou moins et en une fraction lourde comportant 9 atomes de carbone ou plus, séparer la fraction légère en une fraction de BTX contenant du benzène, du toluène et du xylène brut et en une fraction gazeuse présentant un point d'ébullition inférieur à celui de la fraction de BTX, alimenter la fraction gazeuse dans le dispositif de récupération de produit (2) pour l'étape de séparation d'huile lourde thermiquement craquée (3) conjointement avec le produit craqué, et
traiter dans le dispositif de raffinage de BTX (20) la fraction de BTX conjointement avec le composant comportant 6 atomes de carbone ou plus récupéré dans l'étape de récupération,
ladite huile lourde thermiquement craquée étant distillée et séparée en huile de charge qui présente une température de distillation de 90 % en volume de 390°C ou moins et en fraction lourde qui présente une température de distillation de 90 % en volume de plus de 390°C avant l'étape de réaction de craquage et de reformage dans le cas dans lequel l'huile lourde thermiquement craquée ne présente par une température de distillation de 90 % en volume de 390°C ou moins ; et
ladite huile lourde thermiquement craquée étant utilisée comme huile de charge dans l'étape de réaction de craquage et de reformage dans le cas dans lequel l'huile lourde thermiquement craquée présente une température de distillation de 90 % en volume de 390°C ou moins ; et
comprenant en outre avant l'étape de réaction de craquage et de reformage, une étape de réaction d'hydrogénation (31) consistant à hydrogéner partiellement une partie ou la totalité de l'huile de charge dans laquelle, dans l'étape de réaction d'hydrogénation, en tant que conditions d'hydrogénation pour l'hydrogénation de l'huile de charge, la pression partielle d'hydrogène est réglée dans la plage de 1 MPa à 9 MPa, la température d'hydrogénation est réglée dans la plage de 150°C à 400°C, et, en tant que catalyseur d'hydrogénation, un catalyseur obtenu en supportant au moins un métal choisi parmi les métaux du groupe 6 dans le tableau périodique dans la plage de 10 % en masse à 30 % en masse et au moins un métal choisi parmi les métaux des groupes 8 à 10 dans le tableau périodique dans la plage de 1 % en masse à 7 % en masse sur un support inorganique contenant de l'oxyde d'aluminium, par rapport à la masse totale du catalyseur est utilisé ; et l'extraction de l'hydrogène dans une tour de déshydrogénation (32) ; et
comprenant en outre une étape de recyclage (37) consistant à renvoyer la fraction lourde comportant 9 atomes de carbone ou plus provenant du produit obtenu dans l'étape de réaction de craquage et de reformage vers l'étape de réaction de craquage et de reformage via l'étape de réaction d'hydrogénation (31).

2. Procédé de production d'une oléfine et d'un hydrocarbure aromatique monocyclique selon la revendication 1,
dans lequel, dans l'étape de réaction de craquage et de reformage, l'huile de charge est mise à réagir dans un état dans lequel un hydrocarbure saturé comportant 1 à 3 atomes de carbone est co-présent avec l'huile de charge.

3. Procédé de production d'une oléfine et d'un hydrocarbure aromatique monocyclique selon la revendication 1 ou 2,
dans lequel, dans l'étape de réaction de craquage et de reformage, deux réacteurs à lit fixe ou plus sont utilisés et une réaction de craquage et de reformage et la reproduction du catalyseur pour produire une oléfine et un hydrocarbure aromatique monocyclique sont répétées pendant que les réacteurs sont périodiquement commutés.

4. Procédé de production d'une oléfine et d'un hydrocarbure aromatique monocyclique selon l'une quelconque des revendications 1 à 3,
dans lequel l'aluminosilicate cristallin contenu dans le catalyseur pour produire une oléfine et un hydrocarbure aromatique monocyclique utilisé dans l'étape de réaction de craquage et de reformage comprend une zéolite à pores de taille moyenne et/ou une zéolite à pores de grande taille en tant que composant principal.
